(19) 

Europäisches
Patentamt
European
Patent Office
Office européen
des brevets

(11) **EP 4 451 176 A1**

(12) **EUROPEAN PATENT APPLICATION**
published in accordance with Art. 153(4) EPC

(43) Date of publication:
**23.10.2024 Bulletin 2024/43**

(21) Application number: **22925129.3**

(22) Date of filing: **28.12.2022**

(51) International Patent Classification (IPC):
*G06N 3/08* (2023.01)          *G06N 3/04* (2023.01)
*G06N 3/063* (2023.01)         *G06F 7/544* (2006.01)

(52) Cooperative Patent Classification (CPC):
**G06F 7/544; G06N 3/04; G06N 3/063; G06N 3/08**

(86) International application number:
**PCT/KR2022/021539**

(87) International publication number:
**WO 2023/149662 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.02.2022 KR 20220015079**

(71) Applicant: Samsung Electronics Co., Ltd
Suwon-si, Gyeonggi-do 16677 (KR)

(72) Inventors:
• **KIM, Haengkang**
  **Suwon-si, Gyeonggi-do 16677 (KR)**
• **LIM, Daesung**
  **Suwon-si, Gyeonggi-do 16677 (KR)**
• **HAN, Sunbum**
  **Suwon-si, Gyeonggi-do 16677 (KR)**
• **HWANG, Doochan**
  **Suwon-si, Gyeonggi-do 16677 (KR)**

(74) Representative: **Appleyard Lees IP LLP**
**15 Clare Road**
**Halifax HX1 2HY (GB)**

(54) **DATA PROCESSING METHOD AND DATA PROCESSING DEVICE**

(57)  Provided is a data processing method according to an embodiment including obtaining, in order to perform a convolution operation for a plurality of output channels corresponding to a neural network, at least one weight corresponding to at least one input value for at least one output channel among the plurality of output channels, determining at least one operation group corresponding to at least one multiply-accumulate (MAC) calculator so as to include a MAC operation for a second output channel, which does not overlap with a MAC operation for a first output channel at a first operation time, as a MAC operation performed by a first MAC calculator, and generating a plurality of output values corresponding to the plurality of output channels by performing MAC operations in at least one MAC calculator by using the at least one input value and the at least one weight according to the determined at least one operation group.

FIG. 6

```
                    START
                      |
OBTAIN, IN ORDER TO PERFORM CONVOLUTION OPERATION
FOR PLURALITY OF OUTPUT CHANNELS CORRESPONDING TO NEURAL
NETWORK, AT LEAST ONE WEIGHT CORRESPONDING TO          ─ S610
AT LEAST ONE INPUT VALUE FOR AT LEAST ONE OUTPUT
CHANNEL AMONG PLURALITY OF OUTPUT CHANNELS
                      |
DETERMINE AT LEAST ONE OPERATION GROUP TOR
CORRESPONDING TO AT LEAST ONE MAC CALCULATOR SO AS TO
INCLUDE MAC OPERATION FOR SECOND OUTPUT CHANNEL, WHICH  ─ S620
DOES NOT OVERLAP WITH MAC OPERATION FOR FIRST OUTPUT
CHANNEL AT FIRST OPERATION TIME, AS MAC OPERATION
PERFORMED BY FIRST MAC CALCULA
                      |
GENERATE PLURALITY OF OUTPUT VALUES CORRESPONDING TO
PLURALITY OF OUTPUT CHANNELS BY PERFORMING MAC OPERATIONS
IN AT LEAST ONE MAC CALCULATOR BY USING AT LEAST ONE      ─ S630
INPUT VALUE AND AT LEAST ONE WEIGHT ACCORDING TO
DETERMINED AT LEAST ONE OPERATION GROUP
                      |
                    END
```

EP 4 451 176 A1

## Description

Technical Field

The present disclosure relates to a data processing method and a data processing device, and more particularly, to a data processing method and a data processing device for processing data for a convolution operation in a neural network.

Background Art

While pixels on a display of a display device have evolved into higher resolution pixels, most images input to the display device may still be low-resolution images. Accordingly, display devices such as TVs may improve the image quality of low-resolution images by performing signal processing, such as noise removal, detail enhancement, etc., for output via a display with high-resolution pixels. In particular, a display device may improve image quality by using a neural network. For example, a display device may receive a source image as input, extract features therefrom, and perform computation in a deep artificial neural network consisting of a multi-layer perceptron to output detail information. The display device may use the detail information to enhance details of an image. In this process, there is a need to reduce the size of hardware or reduce power consumption by reducing the amount of computation in a deep artificial neural network.

Disclosure

Technical Solution

According to an embodiment of the present disclosure, a data processing method includes obtaining, in order to perform a convolution operation for a plurality of output channels corresponding to a neural network, at least one weight corresponding to at least one input value for at least one output channel among the plurality of output channels, determining at least one operation group corresponding to at least one multiply-accumulate (MAC) calculator so as to include a MAC operation for a second output channel, which does not overlap with a MAC operation for a first output channel at a first operation time, as a MAC operation performed by a first MAC calculator, and generating a plurality of output values corresponding to the plurality of output channels by performing MAC operations in at least one MAC calculator by using the at least one input value and the at least one weight according to the determined at least one operation group.

Description of Drawings

FIG. 1 is a diagram illustrating an unpruned neural network and a pruned neural network.
FIG. 2 is a diagram illustrating an add-tree structure for a convolution operation.
FIG. 3 illustrates a system for performing a convolution operation in a pruned neural network by using multiply-accumulate (MAC) units, according to an embodiment.
FIG. 4 illustrates a system for performing a convolution operation in a pruned neural network by using MAC calculators, according to another embodiment.
FIG. 5 is a diagram illustrating a data processing device according to an embodiment.
FIG. 6 illustrates a flowchart of a data processing method according to an embodiment.
FIG. 7A is a diagram illustrating a neural network implemented by a MAC calculator unit, according to an embodiment.
FIG. 7B is a diagram illustrating a process in which a data processing device performs optimization of operation groups for a plurality of input channels, according to an embodiment.
FIG. 8 is a diagram illustrating operation groups respectively corresponding to a plurality of MAC calculators in a pruned neural network.
FIG. 9 is a diagram illustrating a process of optimizing the operation groups of FIG. 8 via time-sharing for MAC calculators (or operation groups thereof), considering a case where operations do not overlap at a specific time.
FIG. 10A is a diagram illustrating a process in which a data processing device determines an operation group by moving locations of some operations in an optimized number of operation groups of FIG. 9 to another operation group, according to an embodiment.
FIG. 10B is a diagram illustrating a process in which a data processing device determines an operation group by moving locations of some operations in the optimized number of operation groups of FIG. 9 to another operation group, according to an embodiment.
FIG. 10C is a diagram illustrating a process of determining an operation group by moving locations of some operations in the optimized number of operation groups of FIG. 9 to another operation group, according to an embodiment.
FIG. 11 is a diagram illustrating a process of reducing the number of operation groups via optimization of the operation groups of FIG. 8, according to an embodiment.
FIG. 12 is a diagram illustrating an operation in which a data processing device sets an accumulation value of a previous MAC operation as an initial value for a subsequent MAC operation, according to an embodiment.
FIG. 13A is a flowchart of a method of controlling data associated with an initial value and an accumulation value of a MAC operation.

FIG. 13B is a waveform diagram illustrating a control operation for a MAC calculator, according to an embodiment.

FIG. 14 is a detailed block diagram of an electronic device that performs data processing by using a data processing device, according to an embodiment.

Mode for Invention

The first multiply-accumulate (MAC) calculator may perform the MAC operation for the first output channel at a second operation time.

The at least one input value and the at least one weight may be sequentially input to the at least one MAC calculator, the at least one input value and the at least one weight input to the at least one MAC calculator may be synchronized.

The neural network may be a pruned neural network, the pruned neural network may be a neural network with a first weight corresponding to an unpruned neural network set to 0 when the first weight is less than or equal to a predetermined value, and a weight for the MAC operation for the first output channel at the first operation time may be 0.

The MAC calculator may include one multiplier, one adder, and a flip-flop for storing an operation result.

After the same MAC calculator performs a MAC operation for the second output channel at the first operation time, an accumulation value of the MAC operation may be stored in an external storage, and the accumulation value stored in the external storage may be set as an initial value of a MAC operation for the second output channel at the second operation time, wherein the first operation time and the second operation time may be not consecutive but be separate from each other.

After the first MAC calculator performs the MAC operation for the first output channel output channel at the second operation time, an accumulation value of the MAC operation may be stored in an external storage, and the accumulation value stored in the external storage may be set as an initial value of a MAC operation for the second output channel to be performed by a second MAC calculator at the second operation time.

After the same MAC calculator performs the MAC operation for the second output channel at the first operation time, the accumulation value of the MAC operation may be stored in a flip-flop included in the MAC calculator, and the accumulation value stored in the flip-flop may be set as an initial value of a MAC operation for the second output channel at the second operation time, wherein the first operation time and the second operation time may be consecutive.

Accumulation values of MAC operations stored in the external storage or at least one flip-flop included in the at least one MAC calculator may be simultaneously output as a plurality of output values at an end of a data enable interval.

The number of the at least one MAC calculator corresponding to the at least one operation group may be less than the number of the output channels.

The determining of the at least one operation group may include

determining the at least one operation group by moving some of MAC operations for the at least one output channel from a first operation group to a second operation group according to a priority of the at least one output channel, such that the MAC operations for the at least one output channel are included in a same operation group.

The determining of the at least one operation group may include

determining the at least one operation group by moving some of MAC operations for the at least one output channel from a first operation group to a second operation group according to a priority of the at least one output channel and an output channel other than the at least one output channel, such that there is no MAC operation for the other output channel between the MAC operations for the at least one output channel.

The at least one operation group may be determined for a number of input values determined based on a size of a filter, and the at least one operation group may be determined for each frame or in units of a plurality of frames.

According to an embodiment of the present disclosure, a data processing device includes at least one processor configured to obtain, in order to perform a convolution operation for a plurality of output channels corresponding to a neural network, at least one weight corresponding to at least one input value for at least one output channel among the plurality of output channels, determine at least one operation group corresponding to at least one multiply-accumulate calculator so as to include a MAC operation for a second output channel, which does not overlap with a MAC operation for a first output channel at a first operation time, as a MAC operation performed by a first MAC calculator, and generate a plurality of output values corresponding to the plurality of output channels by performing MAC operations in at least one MAC calculator by using the at least one input value and the at least one weight according to the determined at least one operation group.

According to an embodiment of the present disclosure, a computer-readable recording medium may have recorded thereon a program for performing the above-described method on a computer.

In the present disclosure, because various changes may be made, and numerous embodiments may be provided, particular embodiments are illustrated in the drawings and will be described in detail in the detailed description. However, embodiments of the present disclosure are not intended to be limited to the particular embodiments, and it should be understood that all changes, equivalents, and substitutes that do not depart from the spirit and technical scope of numerous embodiments of the present disclosure are encompassed in the present disclosure.

In describing an embodiment, when it is determined that detailed descriptions of related known technologies may unnecessarily obscure the essence of the present disclosure, the detailed descriptions thereof will be omitted. Furthermore, numbers (e.g., a first, a second, etc.) used in the description of the specification are merely identification symbols for distinguishing one element from another.

Furthermore, throughout the specification, it should be understood that when an element is referred to as being "connected" or "coupled" to another element, the element may be directly connected or coupled to the other element, but may also be connected or coupled to the other element via another intervening element therebetween unless there is a particular description contrary thereto.

Furthermore, in the present specification, for an element expressed as a "unit", a "module", or the like, two or more elements may be combined into a single element, or a single element may be divided into two or more elements according to subdivided functions. Furthermore, each element to be described below may further perform, in addition to its main functions, some or all of functions performed by another element, and some of the main functions of each element may also be performed entirely by another element.

Furthermore, as used herein, an 'image' may refer to a still image (or frame), a moving image composed of a plurality of consecutive still images, or a video.

In addition, as used herein, a 'neural network' is a representative example of an artificial neural network model simulating brain nerves, and is not limited to an artificial neural network model using a particular algorithm. A neural network may also be referred to as a deep neural network.

Also, as used herein, a 'parameter' is a value used in a computation process for each of layers constructing a neural network, and for example, may be used when an input value is applied to a certain operation equation. A parameter is a value set as a result of training, and may be updated through separate training data when needed. 'Parameters' may include a weight and a bias.

As used herein, a 'window' is a set of weights used in a computation process for each layer in a neural network, and may be referred to as a filter or kernel. Weights included in a 'window' may be set differently depending on an input channel. For example, a first weight for a first input channel, which is included in the 'window', may be different from a second weight for a second input channel, which is included in the 'window'. Furthermore, a 'window' may exist for each output channel. For example, there may be a first window for a first output channel and a second window for a second output channel.

Also, as used herein, 'feature data' refers to data obtained by processing input data through a neural network. The feature data may be one-dimensional or two-dimensional data including several samples. The feature data may also be referred to as a latent vector or latent representation.

Also, as used herein, a 'sample' refers to data assigned to a sampling position in an image or a feature map and which is subjected to processing. For example, a sample may include pixels in a two-dimensional image.

Furthermore, as used herein, a 'MAC calculator' is a piece of hardware for a convolution operation (or perceptron calculation) and may include one adder and one multiplier. A process in which a MAC calculator performs a multiplication operation and then accumulates a result of the multiplication operation onto a result of a previous MAC operation for a unit time (e.g., 1 clock) may be performed over multiple unit times to output a result of the convolution operation.

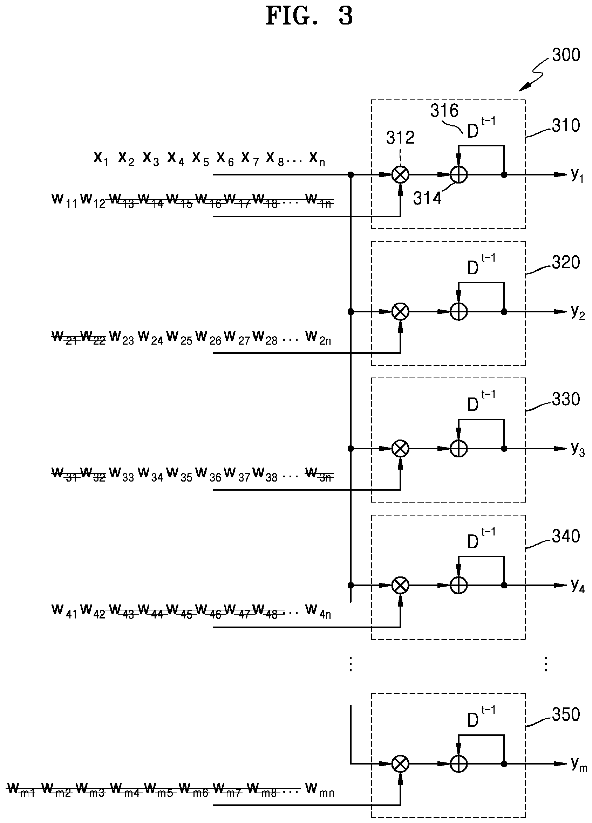

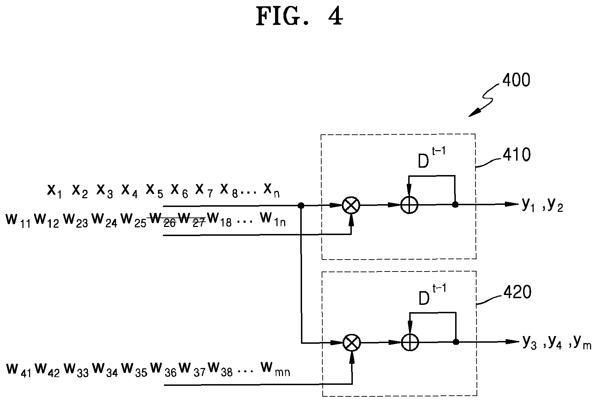

A 'MAC calculator' may be referred to as a 'MAC unit', etc. A 'MAC calculator' will be described in detail below with reference to FIGS. 3 and 4, etc.

In artificial intelligence, 'pruning' refers to reducing the number of branches to be searched when a problem-solving search is represented as a graph search. In a blind search, all branches have to be listed in a certain order, which increases the amount of computation. Therefore, pruning is performed to increase efficiency of the search by excluding undesirable nodes.

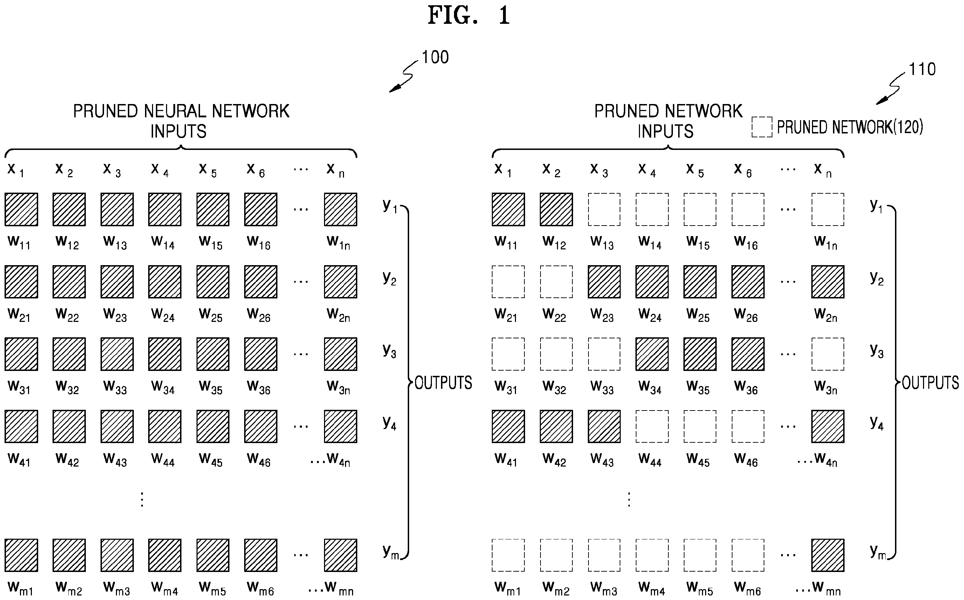

FIG. 1 is a diagram illustrating an unpruned neural network and a pruned neural network.

Referring to FIG. 1, for a convolution operation in a unpruned neural network 100, weights $w_{11}$, $w_{12}, ..., w_{1n}$, $w_{21}, w_{22}, ..., w_{2n}, ..., w_{m1}, ...,$ and $w_{mn}$ (where m and n are natural numbers) corresponding to input values $x_1, x_2, ...,$ and $x_n$ may be obtained. In this case, the obtained weights may all be greater than 0. However, when there are weights corresponding to all input values, the total amount of computation for the convolution operation may be large.

Thus, a pruned neural network 110 may be created by deleting some of the weights in the unpruned neural network 100. According to the pruned neural network 110, the total amount of computation for a convolution operation may be reduced.

When some of the weights corresponding to the input values are less than or equal to a predetermined/certain value, the corresponding weights may be set to 0. Therefore, operations with weights of 0 may not be performed, and the amount of computation for the convolution operation may be reduced.

The pruned neural network 110 may include pruned weights 120, and the pruned weights 120 may be 0. Therefore, operations with weights of 0 may not be performed, and the amount of computation for a convolution operation may be reduced.

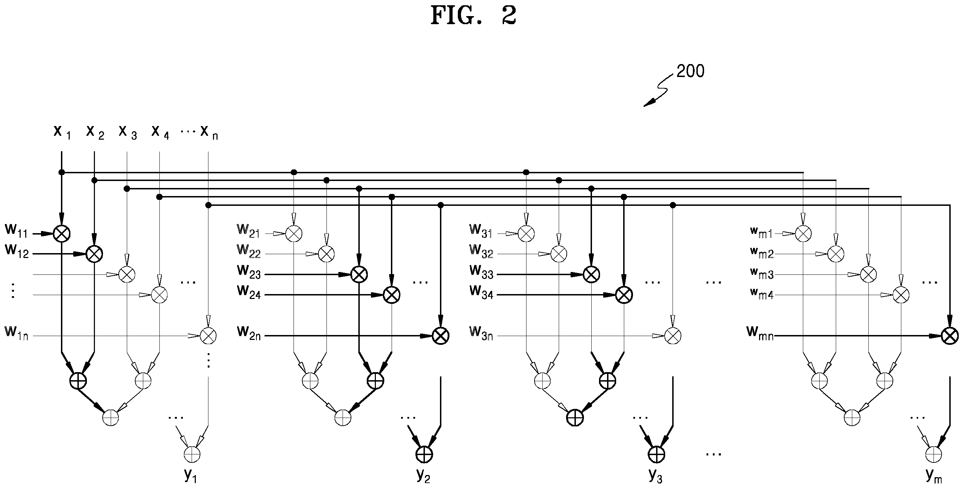

FIG. 2 is a diagram illustrating an add-tree structure for a convolution operation.

Referring to FIG. 2, an add-tree structure 200 may include hardware for performing a convolution op-

eration by using weights $w_{11},..., w_{mn}$ in a neural network with input data $x_1$ to $x_n$ and output data $y_1$ to $y_m$ where n and m are integers greater than 1. Here, n may correspond to a size of a window (and the number of input channels), and m may correspond to the number of output channels.

As shown in FIG. 2, the add-tree structure 200 may include multiple adders and multiple multipliers. According to the add-tree structure 200, output data may be obtained by performing a convolution operation for a unit time (e.g., 1 clock), but a plurality of pieces of hardware are required for the convolution operation.

In particular, for a convolution operation in a neural network, regardless of whether the neural network is a pruned neural network or an unpruned neural network, the ad-tree structure 200 may include a fixed number of adders and multipliers.

FIG. 3 illustrates a system for performing a convolution operation in a pruned neural network by using MAC units, according to an embodiment.

Referring to FIG. 3, a system 300 for performing a convolution operation in a pruned neural network may include multiple MAC units 310, 320, 330, 340,..., and 350.

The MAC units 310, 320, 330, 340,..., and 350 may each be composed of one multiplier, one adder, and a flip-flop for storing an accumulation result of an operation.

For example, the MAC unit 310 may include a multiplier 312, an adder 314, and a flip-flop 316 for storing an accumulation result $D^{t-1}$ of a previous operation. The MAC units 310, 320, 330, 340,..., and 350 may perform a convolution operation in the neural network by accumulating a result of a multiplication operation between a current input value and a corresponding weight onto an accumulation result $D^{t-1}$ of a previous operation. The result of the convolution operation may be obtained by accumulating results of multiplication operations over multiple unit times (e.g., clocks). In this case, each of the MAC units 310, 320, 330, 340,..., and 350 may obtain output data for one output channel.

Input values and weight values may be synchronized according to a frequency of a clock. That is, the synchronized input values and weight values may be input to multipliers respectively included in the MAC units 310, 320, 330, 340,..., and 350.

Using the system 300 may reduce the amount of computation per unit time compared to using the add-tree structure 200, and therefore require less hardware than for the add-tree structure 200.

For example, in the add-tree structure 200 of FIG. 2, a total of n multipliers and $\{n/2+(n/2-1)+...+1\}$ adders are required for an output value $y_1$ of output channel 1, whereas the MAC unit 310 of the system 300 requires only one adder, one multiplier, and one flip-flop for the output value $y_1$.

However, the add-tree structure 200 may process data for a unit time (e.g., 1 clock) to output the result of the convolution operation, but the system 300 may process data for multiple unit times to output the result of the convolution operation.

The system 300 may be used when hardware processing time is sufficient compared to when using the add-tree structure 200.

FIG. 4 illustrates a system for performing a convolution operation in a pruned neural network by using MAC calculators, according to another embodiment.

As described above, in FIG. 3, the MAC units 310, 320, 330, 340,..., and 350 respectively corresponding to output channels 1, 2, 3, 4,..., and m are present in the system 300.

Referring to FIG. 4, MAC calculators 410 and 420 may each perform MAC operations for two or more output channels.

For example, the MAC calculator 410 may perform MAC operations for output channels 1 and 2 to output output values $y_1$ and $y_2$, and the MAC calculator 420 may perform MAC operations for output channels 3, 4,..., and m to output output values $y_3$, $y_4$,..., and $y_m$.

In other words, the amount of hardware computation may be reduced by performing operations for two or more output channels in one MAC calculator through time-sharing for the MAC calculators 410 and 420.

As a result, by reducing the amount of dummy operations, the number of pieces of hardware (adders or multipliers) required for computation may be reduced, and thus, power consumption by hardware may be reduced.

In a pruned neural network, pruned weights are 0, but the weights are merely replaced with zero values, so in a structure such as the system 300 of FIG. 3, the multipliers and adders are not removed.

Through time-sharing for MAC calculators, the number of pieces of hardware used for computation may be reduced by performing operations for other output channels during an operation time when weights for a specific output channel are 0. In other words, the number of pieces of hardware may be reduced by performing operations for output channels, which do not overlap each other at a specific time, in a MAC calculator corresponding to a different output channel.

In this case, the operations not overlapping at the specific time means that at the specific time, an operation for a first output channel is not actually performed, but an operation for a second output channel is performed. That the operation is not actually performed means that a weight corresponding to an input value is 0. That is, when operations for a plurality of output channels are performed simultaneously at a specific time, the operations for the plurality of output channels overlap at the specific time; otherwise, the operations for the plurality of output channels do not overlap at the specific time.

As shown in FIG. 4, in order to perform MAC operations for a plurality of output channels in each of the MAC calculators 410 and 420 via time-sharing for the MAC calculators 410 and 420, hardware capable of storing accumulation values of the MAC operations outside of the MAC calculators 410 and 420 may be required.

In addition, in order to store a result of a MAC operation by each of the MAC calculators 410 and 420 or to set the result as an initial value for a next MAC operation, control of the initial value and the result of the MAC operation may be required.

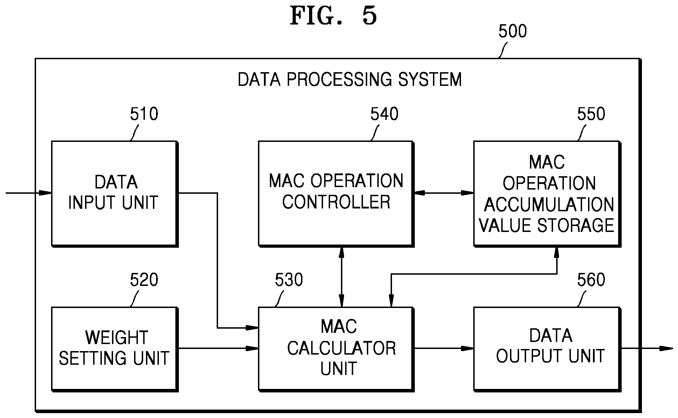

FIG. 5 is a diagram illustrating a data processing device according to an embodiment.

Referring to FIG. 5, the data processing device 500 may include a data input unit 510, a weight setting unit 520, a MAC calculator unit 530, a MAC operation controller 540, a MAC operation accumulation value storage 550, and a data output unit 560.

The data input unit 510, the weight setting unit 520, the MAC calculator unit 530, the MAC operation controller 540, the MAC operation accumulation value storage 550, and the data output unit 560 may operate in accordance with instructions stored in a memory (not shown).

While FIG. 5 shows the data input unit 510, the weight setting unit 520, the MAC calculator unit 530, the MAC operation controller 540, the MAC operation accumulation value storage 550, and the data output unit 560 are separate from each other, the data input unit 510, the weight setting unit 520, the MAC calculator unit 530, the MAC operation controller 540, the MAC operation accumulation value storage 550, and the data output unit 560 may be implemented as a single processor. In this case, the data input unit 510, the weight setting unit 520, the MAC calculator unit 530, the MAC operation controller 540, the MAC operation accumulation value storage 550, and the data output unit 560 may be implemented as a dedicated processor, or may be implemented via a combination of software and a general-purpose processor, such as an application processor (AP), a central processing unit (CPU), or a graphics processing unit (GPU). In addition, when implemented as a dedicated processor, it may include a memory for implementing an embodiment of the present disclosure, or a memory processor for using an external memory.

The data input unit 510, the weight setting unit 520, the MAC calculator unit 530, the MAC operation controller 540, the MAC operation accumulation value storage 550, and the data output unit 560 may be configured as a plurality of processors. In this case, they may be implemented via a combination of dedicated processors, or may be implemented via a combination of software and multiple general-purpose processors such as APs, CPUs, or GPUs. The data input unit 510, the weight setting unit 520, the MAC calculator unit 530, the MAC operation controller 540, the MAC operation accumulation value storage 550, and the data output unit 560 may be implemented as a system-on-chip (SoC) that integrates a core (not shown) with a GPU (not shown).

The data input unit 510 may receive input data for performing a convolution operation corresponding to a neural network. For example, the data input unit 510 may receive data about samples in a decoded image or data about samples in feature data of an image. For example, the data input unit 510 may obtain at least one line of sample data from at least one line memory.

The data input unit 510 may continuously supply input data to the MAC calculator unit 530 per unit time, so that the MAC calculator unit 530 may perform a convolution operation. The data input unit 510 may equally supply input data into a plurality of MAC calculators included in the MAC calculator unit 530 during a unit time.

The weight setting unit 520 may obtain at least one weight corresponding to at least one input value for a plurality of output channels.

According to an embodiment, the weight setting unit 520 may obtain weights from at least one line memory.

The weight setting unit 520 may determine, based on at least one input value and at least one weight, at least one operation group corresponding to at least one MAC calculator. The at least one MAC calculator may be included in the MAC calculator unit 530.

That is, in order for the at least one MAC calculator to sequentially perform MAC operations, the weight setting unit 520 may determine an operation group representing an input value fed at each time (or the time) and a weight corresponding thereto.

In an embodiment, the weight setting unit 520 may determine at least one operation group corresponding to at least one MAC calculator so that a MAC operation for a second output channel, which does not overlap with a MAC operation for a first output channel at a first operation time, is included as a MAC operation performed by a first MAC calculator.

In this case, the first MAC calculator may perform the MAC operation for the first output channel at a second operation time that is different from the first operation time.

In an embodiment, the number of at least one MAC calculator (or operation group thereof) corresponding to at least one operation group may be less than the number of output channels. However, the present disclosure is not limited thereto, and the number of at least one MAC calculator may be less than a maximum number of MAC calculators determined based on the number of output channels, the size of a window, and the number of input channels.

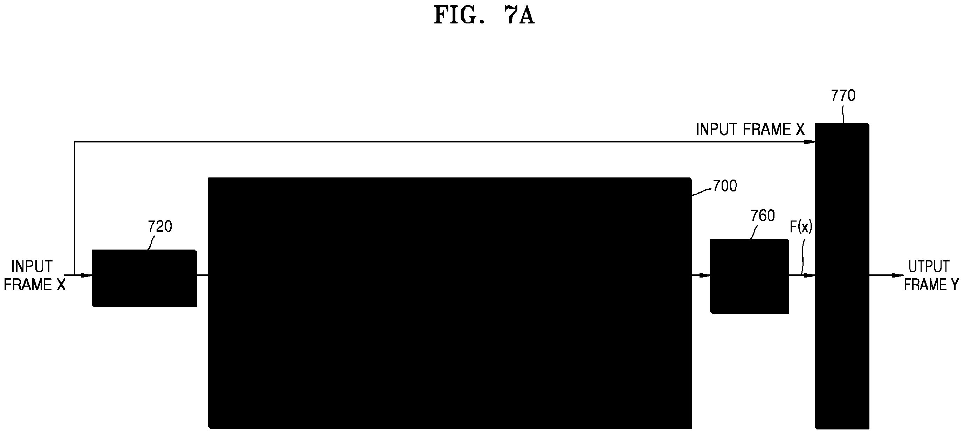

Specifically, a process of determining the maximum number of MAC calculators is described below with reference to FIG. 7A.

In an embodiment, the weight setting unit 520 may determine an operation group by moving some of MAC operations for at least one output channel from a first operation group to a second operation group according to a priority of the at least one output channel, such that the MAC operations for the at least one output channel are included in the same operation group.

In an embodiment, the weight setting unit 520 may determine an operation group by moving some of the MAC operations for the at least one output channel from the first operation group to the second operation group according to a priority of the at least one output channel and an output channel other than the at least one output channel, such that there is no MAC operation for the other output channel between the MAC operations for the at least one output channel. In this case, the operation group may be determined for a number of input values determined based on the size of the window. For example, when the size of the window is 9, an operation group may be determined for 9 input values. One operation group may be determined for all input channels, but the present disclosure is not limited thereto, and multiple operation groups may be determined for all input channels.

Based on the determined operation group, the weight setting unit 520 may, in synchronization with the output of the data input unit 510, supply weights to the plurality of MAC calculators included in the MAC calculator unit 530. In this case, the output of the data input unit 510 and the weight of the weight setting unit 520 may be synchronized to a specific clock frequency.

The MAC calculator unit 530 is an example of a perceptron calculation unit or a convolution operation unit, and each of the plurality of MAC calculators included in the MAC calculator unit 530 may be composed of a multiplier and an adder that recursively accumulates and adds a result from the multiplier. Each of the plurality of MAC calculators may include a flip-flop for storing an accumulation result of a previous operation.

The MAC operation controller 540 may control the MAC calculator unit 530 and the MAC operation accumulation value storage 550.

In an embodiment, the MAC operation controller 540 may control the MAC calculator unit 530 and the MAC operation accumulation value storage 550 to set an operation accumulation value for a specific output channel, which is stored in the MAC operation accumulation value storage 550, as an initial operation value of the MAC calculator unit 530 at a specific time. In this case, the MAC operation controller 540 may control the MAC calculator unit 530 and the MAC operation accumulation value storage 550 according to the at least one operation group determined by the weight setting unit 520.

In an embodiment, the MAC operation controller 540 may control the MAC calculator unit 530 to output an output value (an operation result) for a specific output channel of the MAC calculator unit 530 to the data output unit 560, or control the MAC calculator unit 530 and the MAC operation accumulation value storage 550 to store, in the MAC operation accumulation value storage 550, the output value for the specific output channel of the MAC calculator unit 530.

The MAC operation controller 540 may control the MAC calculator unit 530 to, after a MAC calculator included in the MAC calculator unit 530 performs a MAC operation for an output channel at the first operation time, store an accumulation value of the MAC operation in the MAC operation accumulation value storage 550.

The MAC operation controller 540 may control the MAC operation accumulation value storage 550 to transmit the accumulation value stored in the MAC operation accumulation value storage 550 to the MAC calculator in order to set an initial value of a MAC operation for the same output channel at the second operation time.

Here, the first operation time and the second operation time may not be consecutive but be separate from each other. In other words, a MAC operation for another output channel may be performed by the MAC calculator between the first operation time and the second operation time.

The MAC operation controller 540 may control the first MAC calculator included in the MAC calculator unit 530 and the MAC operation accumulation value storage 550 to store, in the MAC operation accumulation value storage 550, an accumulation value of a MAC operation obtained after the first MAC calculator performs the MAC operation for an output channel at the first operation time.

The MAC operation controller 540 may control the MAC operation accumulation value storage 550 and a second MAC calculator to transmit the accumulation value stored in the MAC operation accumulation value storage 550 to the second MAC calculator in order to set an initial value of a MAC operation for the same output channel at the second operation time.

That is, the MAC operation controller 540 may store an accumulation value in the MAC operation accumulation value storage 550 and transmit the stored accumulation value to a MAC calculator that is different from a previous MAC calculator, so that the different MAC calculators may perform MAC operations for the same output channel.

However, when the MAC operations for the same output channel are performed successively by the different MAC calculators, without storing the operation accumulation value in the MAC operation accumulation value storage 550, the MAC operation controller 540 may control transmission of the accumulation value of the MAC operation so that the MAC operation accumulation value from the first MAC calculator is set as the initial value for the second MAC calculator.

The MAC operation controller 540 may control the supply of accumulation values of MAC operations to the data output unit 560 so that the accumulation values of the MAC operations stored in the MAC calculator unit 530 or the MAC operation accumulation value storage 550 may be simultaneously output as a plurality of output values for the plurality of output channels at the end of a data enable interval.

The data output unit 560 may output a plurality of output values for the plurality of output channels to the outside. In this case, the output data may include an output value corresponding to one sample for one output channel. At this time, the output value for the one output channel may be a value corresponding to all of a plurality of input channels, but is not limited thereto and may be a value corresponding to at least one input channel. In addition, the output data is not limited to including one output value corresponding to one sample for one output channel, and the output data may be a plurality of output values corresponding to a plurality of samples.

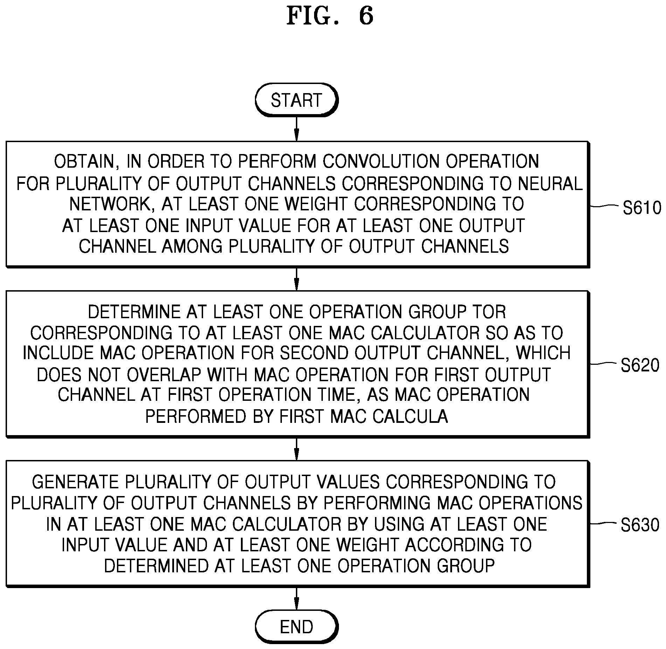

FIG. 6 illustrates a flowchart of a data processing method according to an embodiment.

Referring to FIG. 6, in operation S610, in order to perform a convolution operation for a plurality of output channels corresponding to a neural network, the data processing device 500 may obtain at least one weight corresponding to at least one input value for at least one output channel among the plurality of output channels.

The neural network may be a pruned neural network, but is not limited thereto and may be an unpruned neural network. The pruned neural network may be a neural network with a first weight corresponding to the unpruned neural network set to 0 when the first weight is less than or equal to a predetermined value.

In operation S620, the data processing device 500 may determine at least one operation group corresponding to at least one MAC calculator so as to include a MAC operation for a second output channel, which does not overlap with a MAC operation for a first output channel at a first operation time, as a MAC operation performed by a first MAC calculator.

The first MAC calculator may perform the MAC operation for the first output channel at a second operation time that is different from the first operation time. The first MAC calculator may not perform the MAC operation for the first output channel at the first operation time. That is, a weight for the MAC operation for the first output channel at the first operation time may be 0.

The first MAC calculator may perform the MAC operation for the second output channel at the first operation time.

A MAC calculator may include one adder, one multiplier, and one flip-flop for storing a result of a MAC operation.

An accumulation value of a MAC operation obtained after the MAC calculator performs the MAC operation for an output channel at the first operation time may be stored in an external storage. The external storage may be a flip-flop located outside the MAC calculator, but is not limited thereto.

The operation accumulation value stored in the external storage may be set as an initial value of a MAC operation for the same output channel at the second operation time. The first operation time and the second operation time may not be consecutive but be separate from each other. However, the present disclosure is not limited thereto, and the first operation time and the second operation time may be consecutive.

In an embodiment, an accumulation value of a MAC operation obtained after the first MAC calculator performs the MAC operation for the first output channel during the second operation time before the first operation time may be stored in the external storage. The accumulation value stored in the external storage may be set as an initial value of a MAC operation for the first output channel (an initial value for the first MAC calculator) at a third operation time after the first operation time.

In an embodiment, after performing a MAC operation for the second output channel at the first operation time in the same MAC calculator, an accumulation value of the MAC operation may be stored in a flip-flop included in the MAC calculator. The accumulation value stored in the flip-flop may be set as an initial value of a MAC operation for the second output channel at the second operation time. In this case, the first operation time and the second operation time may be consecutive.

In an embodiment, the data processing device 500 may determine an operation group by moving some of MAC operations for at least one output channel from a first operation group to a second operation group according to a priority of the at least one output channel, such that the MAC operations for the at least one output channel are included in the same operation group.

In an embodiment, the data processing device 500 may determine an operation group by moving some of the MAC operations for the at least one output channel from the first operation group to the second operation group according to a priority of the at least one output channel and other channels, such that there is no MAC operation for an output channel other than the at least one output channel between the MAC operations for the at least one output channel.

In operation S630, the data processing device 500 may generate a plurality of output values corresponding to the plurality of output channels by performing MAC operations in at least one MAC calculator by using the at least one input value and the at least one weight according to the determined at least one operation group. In this case, the at least one input value and the at least one weight may be sequentially input to the at least one MAC calculator. The at least one input value and the at least one weight input to the at least one MAC calculator may be synchronized.

In an embodiment, accumulation values of MAC operations stored in the external storage or at least one flip-flop included in the MAC calculator may be simultaneously output as a plurality of output values at the end of a data enable interval.

In an embodiment, the number of the at least one MAC calculator (or operation group thereof) corresponding to at least one operation group may be less than the number of output channels. Furthermore, the number of at least one MAC calculator may be greater than or equal to a maximum number of overlapping operations at a specific time (clock).

The data enable interval may refer to an interval during which a data enable signal is 1. A time point at which the data enable signal changes from 1 to 0 may be the end of the data enable interval.

FIG. 7A is a diagram illustrating a neural network implemented by a MAC calculator unit, according to an embodiment.

Referring to FIG. 7A, according to an embodiment, a neural network 700 implemented by the MAC calculator unit 530 may include a plurality of layers 730, 740, and 750. The neural network 700 may be a neural network for improving the quality of an image. The neural network 700 may be pre-trained based on a training dataset to finally output high-quality input frames by taking low-quality input frames as input. Through training, weights in windows for a plurality of layers, i.e., layer 1 730, layer 2 740,..., and layer N 750, may be set. In this case, some of the weights in a window may be set to 0 through pruning.

The data processing device 500 may obtain data x1 of multiple channels by performing subsampling 720 on an input frame x. The input frame may be data of w x h x ch samples. w may represent a width of the frame, h may represent a height of the frame, and ch may represent the number of input channels (e.g., 3 channels of RGB or YCbCr). For example, the input frame may be 3840x2160x3 data.

The data x1 of the multiple channels generated through the subsampling 720 may be data of g x h x i samples. The subsampling 720 may be a space-to-depth transformation operation that increases the number of channels (depth) while keeping the number of samples the same.

For example, wx h x ch, which is the number of samples in the input frame x, may be equal to g x h x i, which is the number of samples in the data x1 of multiple channels, and i may be greater than ch. For example, the data x1 of multiple channels may be 960 x 540 x 48 data.

The data processing device 500 may input the data x1 of the multiple channels to layer 1 730 and output data of X output channels. In this case, a window of size a x b may be used. The size of a window may indicate the number of input values required to produce one output value. A size of an operation group may correspond to the size of the window. For example, when the size of a window is a x b, the size of an operation group may be a x b. Weights included in one window may be different for each input channel. Furthermore, a window may be created for each output channel.

The data processing device 500 may use the MAC calculator unit 530 to obtain data for X channels. The MAC calculator unit 530 may include a plurality of MAC calculators.

In this case, the plurality of MAC calculators may perform MAC operations in parallel to obtain data for X output channels.

The plurality of MAC calculators may obtain data $x_2$ for the X output channels by performing the MAC operations in parallel according to a plurality of operation groups.

The data processing device 500 may input the data $x_2$ of the X channels to layer 2 740 to output data of Y output channels. In this case, a window of size c x d may be used.

The data processing device 500 may use the MAC calculator unit 530 to obtain data for Y channels. The MAC calculator unit 530 may include a plurality of MAC calculators. In this case, the plurality of MAC calculators may perform MAC operations in parallel to obtain data for Y output channels. The plurality of MAC calculators may obtain data x3 for the Y output channels by performing the MAC operations in parallel according to a plurality of operation groups.

A convolution operation in layer 2 740 is performed based on an output value of a convolution operation in layer 1 730. Thus, the plurality of MAC calculators used for the convolution operation in layer 1 730 and the plurality of MAC calculators in layer 2 740 cannot perform MAC operations in parallel.

The data processing device 500 may output data of Z output channels by inputting to layer N 750 the data x3 of the Y channels or data of a plurality of channels obtained through intermediate layers not shown in FIG. 7A. In this case, a window of size e x f may be used.

The data processing device 500 may use the MAC calculator unit 530 to obtain data for Z channels. The MAC calculator unit 530 may include a plurality of MAC calculators.

In this case, the plurality of MAC calculators may perform MAC operations in parallel to obtain data for Z output channels. The plurality of MAC calculators may obtain data xn for the Z output channels by performing the MAC operations in parallel according to a plurality of operation groups.

As described above, the plurality of MAC calculators used for a convolution operation in layer N 750 and the plurality of MAC calculators in layer 1 730 and layer 2 740 cannot perform MAC operations in parallel.

The data processing device 500 may obtain output data F(x) by performing upscaling 760 on the data xn. The output data F(x) may be data of w x h x ch samples. w may represent a width of a frame, h may represent a height of a frame, and ch may represent the number of input channels (e.g., 3 channels of RGB or YCbCr). For example, the output data F(x) may be 3840x2160x3 data.

The upscaling 720 may be a depth-to-space transformation operation that reduces the number of channels (depth) while keeping the number of samples the same. For example, j x k x Z, which is the number of samples in the data xn, may be equal to w x h x ch, which is the number of samples in the output data F(x), and Z may be less than ch.

The data processing device 500 may obtain an output frame y by performing mixing 770 of the input frame x and the output data F(x). According to an embodiment, global scene information may be used for the mixing 770. Here, the global scene information represents information about an overall image, for example, global scene information may be information indicating whether the image is a pattern image, whether the image is a scene transition portion, whether the image is a high-resolution image generated by upscaling a low-resolution image, etc. Based on the global scene information, the data processing device 500 may determine how much the output data F(x) associated with details is to be mixed into the input frame x.

The maximum number of the plurality of MAC calculators or the maximum number of the plurality of operation groups for each layer may be determined by taking into account that an output frame is to be generated from an input frame in real time.

Preferably, the maximum number of the plurality of MAC calculators or plurality of operation groups may be the number of output channels in a layer. However, it is not limited thereto, and may be determined by taking into account the size of a window, the number of input channels, the number of output channels, etc.

For example, when the input frame has a 4k resolution, a clock frequency for operation of the data processing device 500 is 600 MHz, and a display frequency is 60 Hz, the time given for data processing per pixel may be 600MHz/60Hz/3840/2160 = 1.2xxxx clocks. On the other hand, when the size of the data input to a layer after subsampling is reduced to 960x540, the time given for processing per pixel may be 600MHz / 60 Hz / 960 / 540 = 19.xxx clocks (considering blank and clock margin, 4320x2160/960/540 = 18 clocks).

When the size of a window in a layer is 3x3 and the number of input channels is 24, 216 (=3x3x24) clocks are required to obtain one output, but because the given time is only 18 clocks, 12 MAC calculators per output channel may be required for real-time operation.

For convenience of description, it is assumed above that the neural network has one layer, but when the neural network has a plurality of layers, MAC operations cannot be performed in parallel between the layers, so the time allocated to each layer for real-time operation may be calculated, and the maximum number of MAC calculators required for each layer may be determined. However, the present disclosure is not limited thereto, and the data processing device 500 may dynamically allocate the time given to the neural network 700 to the layers for real-time operation and determine the maximum number of MAC calculators in the layers.

The neural network 700 described above with reference to FIG. 7A is only an example and is not limited thereto, and various forms of neural networks may be implemented by MAC calculators.

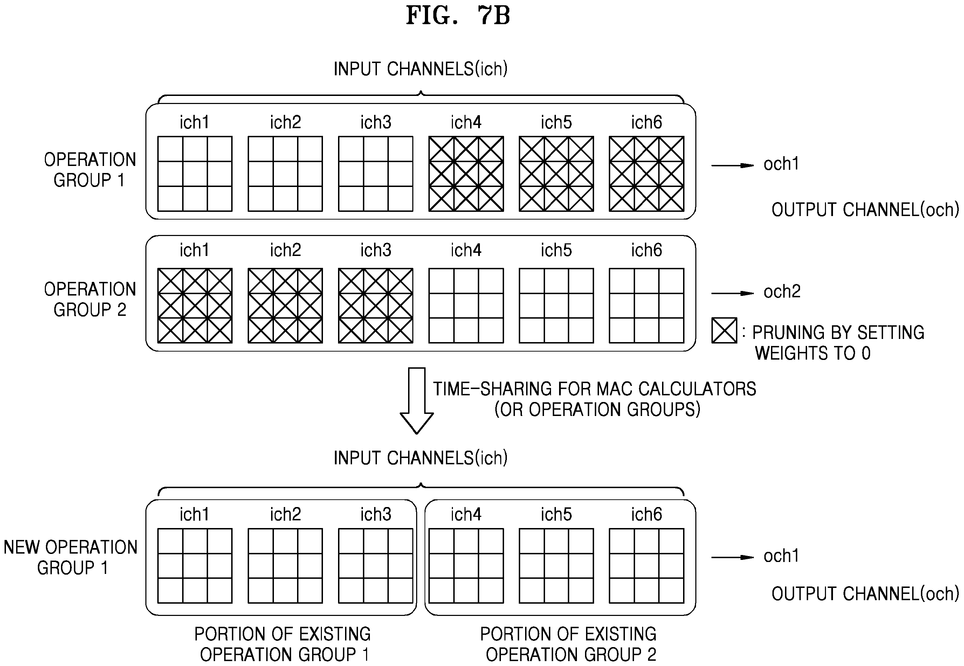

FIG. 7B is a diagram illustrating a process in which a data processing device performs optimization of operation groups for a plurality of input channels, according to an embodiment.

Referring to FIG. 7B, it is assumed that for one of the plurality of layers 730, 740, and 750 included in the neural network 700 of FIG. 7A, data with two output channels are output by applying a 3x3 window to data with six input channels.

According to an embodiment, the data processing device 500 may prune weights for processing input data of input channel 1 Ich1 to input channel 6 Ich6 included in operation group 1. The data processing device 500 may prune all weights in windows for input channel 4 to input channel 6 to set the weights to 0.

The data processing device 500 may generate data of output channel 1 Och1 by performing a MAC operation according to the operation group 1 based on input data and weight data in a MAC calculator #1.

The data processing device 500 may prune some weights in windows for processing input data of input channel 1 Ich1 to input channel 6 Ich6 included in operation group 2. For example, the data processing device 500 may prune all weights in windows for input channels 1 to 3 to set the weights to 0. The data processing device 500 may generate data of output channel 2 Och2 by performing a MAC operation according to operation group 2 based on input data and weight data in a MAC calculator #2.

According to the above embodiment, the data processing device 500 may perform MAC operations by using the MAC calculator#1 corresponding to the operation group 1 and the MAC calculator #2 corresponding to the operation group 2.

According to another embodiment, the data processing device 500 may determine a new operation group 1 based on a portion of the operation group 1 and a portion of the operation group 2 determined in the above-described embodiment. For example, the data processing device 500 may determine weights in windows for input channels 1 to 3 included in the new operation group 1 as being weights in windows for the input channels 1 to 3 included in the existing operation group 1. Furthermore, the data processing device 500 may determine weights in windows for input channels 4 to 6 included in the new operation group 1 as being weights in windows for the input channels 4 to 6 included in the existing operation group 2.

The data processing device 500 may perform the same MAC operation as in the above-described embodiment by using only the MAC calculator #1 corresponding to the new operation group 1.

According to another embodiment, the data processing device 500 may reduce the number of operation groups by optimizing operation groups via time-sharing for MAC calculators. As the number of operation groups decreases, the number of MAC calculators required for the operation may be reduced. Eventually, the number of pieces of hardware for performing computation decreases, power consumption by the hardware may also be reduced.

While it has been described above with reference to FIG. 7B that the data processing device 500 optimizes operation groups on a per-input channel basis, the present disclosure is not limited thereto, and the data processing device 500 may optimize operation groups in units of weights in a plurality of input channels included in an operation group.

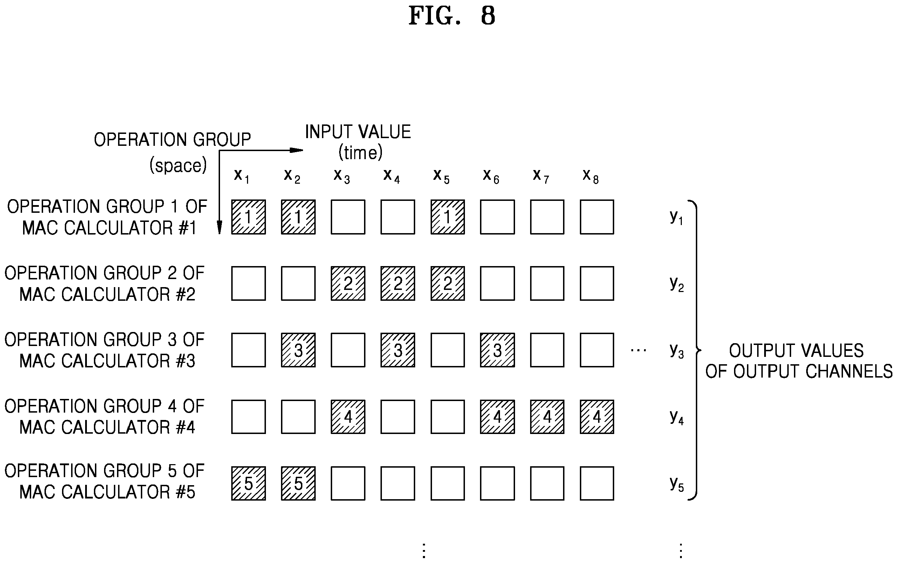

FIG. 8 is a diagram illustrating operation groups respectively corresponding to a plurality of MAC calculators in a pruned neural network.

Referring to FIG. 8, there may be a MAC calculator corresponding to each output channel.

For example, a MAC calculator #1 may correspond to output channel 1 (and output value $y_1$ of the output channel 1). A MAC calculator #2 may correspond to output channel 2 (and output value $y_2$ of the output channel 2). Similarly, a MAC calculator #m (where m is an integer greater than 2) may correspond to output channel m (and output value $y_m$ of the output channel m).

An operation group may be composed of weights corresponding to each time (or input at each time), assuming that the same input is fed to MAC calculators #1 to #5 at the same time.

For example, a weight for the MAC calculator #1, corresponding to input $x_1$ (or clock 1), may be expressed as 1. Here, 1 does not mean a weight value, but may mean a weight for the output channel 1.

A weight for the MAC calculator #5, corresponding to input $x_1$, may be expressed as 5. Here, 5 does not mean a weight value, but may mean a weight for output channel 5. The value of weights for the MAC calculator #2 to MAC calculator #4 corresponding to input $x_1$ may be 0.

In FIG. 8, a size of a window for producing one output value may be 8. That is, the size of the window may be a value corresponding to 8, which is the number of input values $x_1$ to $x_8$ required to determine one output value corresponding to one input channel. The operation groups 1 to 5 may each be determined for 8 input values.

The operation groups 1 to 5 may each be determined for each frame that is a unit of processing by a neural network. The present disclosure is not limited thereto, and the operation groups 1 to 5 may each be determined in units of a plurality of frames. The plurality of frames may be frames corresponding to a single scene, but are not limited thereto and may be a predetermined number of frames.

As described above with reference to FIG. 7B, one operation group may be determined in correspondence to a plurality of input channels, and in this case, the operation group may be determined for a number of samples equal to the size of the window x the number of input channels. In this case, input samples for the operation group may be samples obtained when samples $x_1$,..., and $x_n$ (n is the size of the window) for one input channel are repeated as many times as the number of input channels.

Referring to FIG. 8, there are intervals with a weight of 0 in the operation groups 1 to 5 for the MAC calculators #1 to #5.

The number of MAC calculators may be reduced when a MAC operation for another output channel may be performed at an interval of an input value corresponding to a weight of 0 via time-sharing for MAC calculators (or MAC operation groups).

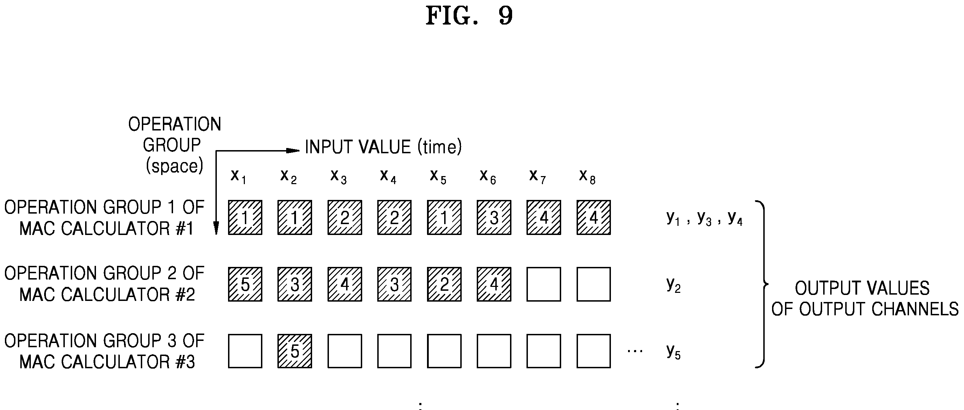

FIG. 9 is a diagram illustrating a process of optimizing the operation groups of FIG. 8 via time-sharing for MAC calculators (or operation groups thereof), considering a case where operations do not overlap at a specific time.

Referring to FIG. 9, when the MAC operations do not overlap at a specific time in FIG. 8, the data processing device 500 may optimize the operation groups so that an operation to be performed by a first MAC calculator may be performed by a second MAC calculator.

For example, at a time when the input value is x1, the MAC calculators #2 to #4 (operation groups 2 to 4) have a weight of zero, so MAC operations by the MAC calculators #1 and #5 (operation groups 1 and 5) may not overlap with MAC operations by the MAC calculators #2 to #4 (operation groups 2 to 4).

Therefore, the operation groups may be optimized so that the operation to be performed by the MAC calculator #5 may be performed by the MAC calculator #2 (the operation in operation group 5 may be included in operation group 2). Similarly, the operation groups may be optimized by grouping the operations together, such as by filling in the blanks in a vertically upward direction.

The optimized operation groups are as shown in FIG. 9. Due to optimization of the operation groups, the number of MAC calculators (or operation groups) may be reduced. That is, in FIG. 8, the MAC calculator unit (or operation groups) includes MAC calculators #1 to #5 (or operation groups 1 to 5), but in FIG. 9, the MAC calculator unit (or operation groups) may include MAC calculators #1 to #3 (or operation groups 1 to 3).

Unlike in FIG. 8, each MAC calculator may perform MAC operations for a plurality of output channels. The number of operation groups in FIG. 9 may be reduced to the maximum number (i. e., 3) of output channels for which operations overlap with each other at a time corresponding to a specific input value in FIG. 8.

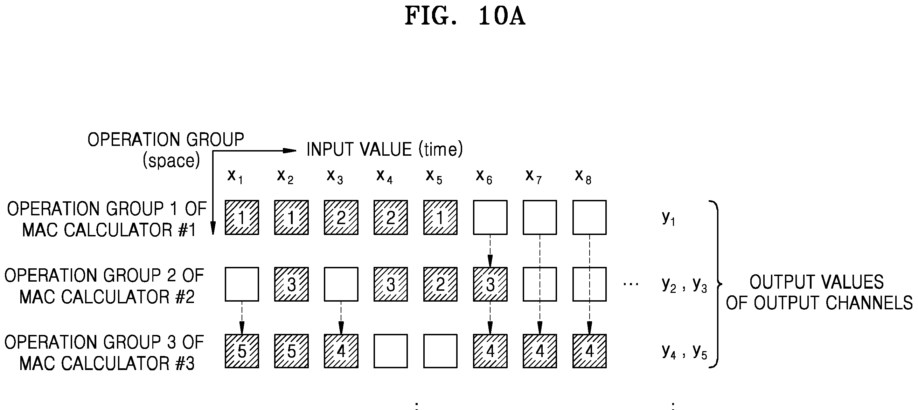

FIG. 10A is a diagram illustrating a process in which the data processing device 500 determines an operation group by moving locations of some operations in the optimized number of operation groups of FIG. 9 to another operation group, according to an embodiment.

Referring to FIG. 10A, the data processing device 500 may move locations of some operations to an operation group corresponding to another MAC calculator so that the number of operation groups does not exceed the optimized number of operation groups (3) of FIG. 9.

That is, the data processing device 500 may move the locations of some operations so that operations for the same output channel may be performed as much as possible in one operation group.

Referring to FIG. 10A, at a time when the input value is x1, the data processing device 500 may move a weight ("5") for output channel 5 included in the operation group 2 of MAC calculator #2 to the operation group 3 of MAC calculator #3.

At a time when the input value is $x_3$, the data processing device 500 may move a weight ("4") for output channel 4 included in the operation group 2 of MAC calculator #2 to the operation group 3 of MAC calculator #3.

At a time when the input value is $x_6$, the data processing device 500 may move a weight ("3") for output channel 3 included in the operation group 1 of MAC calculator #1 to the operation group 2 of MAC calculator #2. At the time when the input value is $x_6$, the data processing device 500 may move the weight ("4") for output channel 4 included in the operation group 2 of MAC calculator #2 to the operation group 3 of MAC calculator #3.

At times when the input values are $x_7$ and $x_3$, the data processing device 500 may move the weight ("4") for output channel 4 included in the operation group 1 of MAC calculator #1 to the operation group 3 of MAC calculator #3.

Unlike in FIG. 9, the MAC operations for output channel 3, which are included in the operation group of FIG. 10A, may be performed by the same MAC calculator #2.

Furthermore, unlike in FIG. 9, the MAC operations for output channel 5, which are included in the operation group of FIG. 10A, may be performed by the same MAC calculator #3.

Unlike in FIG. 9, the MAC operation for output channel 4, which are included in the operation group of FIG. 10A, may be performed by the same MAC calculator #3.

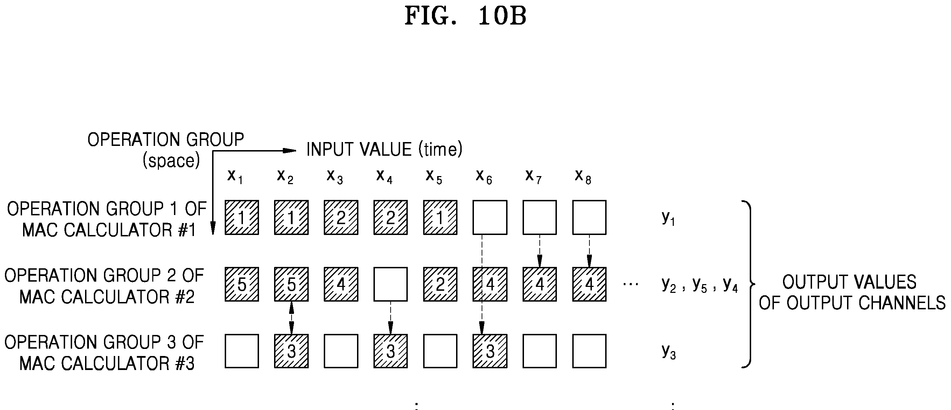

FIG. 10B is a diagram illustrating a process in which the data processing device 500 determines an operation group by moving locations of some operations in the optimized number of operation groups of FIG. 9 to another operation group, according to an embodiment.

Referring to FIG. 10B, at a time when the input value is $x_2$, the data processing device 500 may move the weight ("3") for output channel 3 included in the operation group 2 of MAC calculator #2 to the operation group 3 of MAC calculator #3. At the time when the input value is $x_2$, the data processing device 500 may move the weight ("5") for output channel 5 included in the operation group 3 of MAC calculator #3 to the operation group 2 of MAC calculator #2.

At a time when the input value is $x_4$, the data processing device 500 may move the weight ("3") for output channel 3 included in the operation group 2 of MAC calculator #2 to the operation group 3 of MAC calculator #3.

At the time when the input value is $x_6$, the data processing device 500 may move the weight ("3") for output channel 3 included in the operation group 1 of MAC calculator #1 to the operation group 3 of MAC calculator #3.

At the times when the input values are $x_7$ and

$x_8$, the data processing device 500 may move the weight ("4") for output channel 4 included in the operation group 1 of MAC calculator #1 to the operation group 2 of MAC calculator #2.

Unlike in FIG. 9, the MAC operation for output channel 3, which is included in the operation group of FIG. 10B, may be performed by the same MAC calculator #3. Furthermore, unlike in FIG. 9, the MAC operations for output channel 5, which are included in the operation group of FIG. 10B, may be performed by the same MAC calculator #2. Unlike in FIG. 9, the MAC operations for output channel 4, which is included in the operation group of FIG. 10B, may be performed by the same MAC calculator #2.

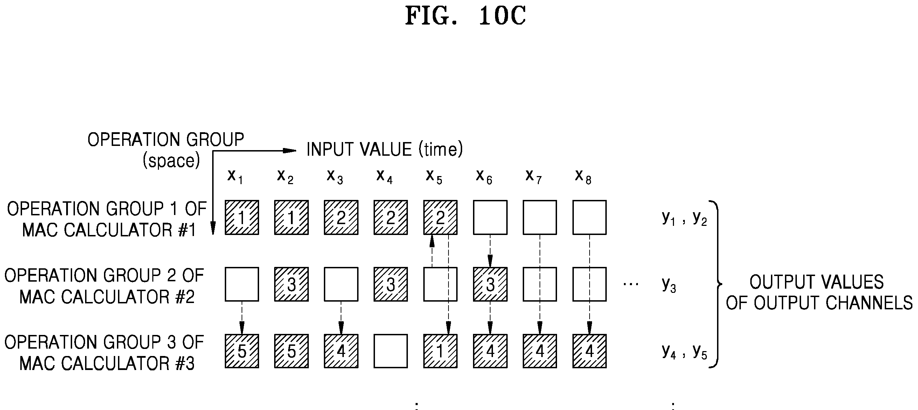

FIG. 10C is a diagram illustrating a process of determining an operation group by moving locations of some operations in the optimized number of operation groups of FIG. 9 to another operation group, according to an embodiment.

Referring to FIG. 10C, at the time when the input value is $x_1$, the data processing device 500 may move the weight ("5") for output channel 5 included in the operation group 2 of MAC calculator #2 to the operation group 3 of MAC calculator #3. At the time when the input value is $x_3$, the data processing device 500 may move the weight ("4") for output channel 4 included in the operation group 2 of MAC calculator #2 to the operation group 3 of MAC calculator #3.

At a time when the input value is $x_5$, the data processing device 500 may move a weight ("1") for output channel 1 included in the operation group 1 of MAC calculator #1 to the operation group 3 of MAC calculator #3. At the time when the input value is $x_5$, the data processing device 500 may move a weight ("2") for output channel 2 included in the operation group 2 of MAC calculator #2 to the operation group 1 of MAC calculator #1.

At the time when the input value is $x_6$, the data processing device 500 may move the weight ("3") for output channel 3 included in the operation group 1 of MAC calculator #1 to the operation group 2 of MAC calculator #2.

At the time when the input value is $x_6$, the data processing device 500 may move the weight ("4") for output channel 4 included in the operation group 2 of MAC calculator #2 to the operation group 3 of MAC calculator #3.

At the time when the input value is $x_7$, the data processing device 500 may move the weight ("4") for output channel 4 included in the operation group 1 of MAC calculator #1 to the operation group 3 of MAC calculator #3. At the time when the input value is $x_8$, the data processing device 500 may move the weight ("4") for output channel 4 included in the operation group 1 of MAC calculator #1 to the operation group 3 of MAC calculator #3.

Unlike in FIG. 10A, the MAC operations for output channel 2, which are included in the operation group of FIG. 10C, may be performed by the same MAC calculator #1. Furthermore, unlike in FIG. 10C, the MAC operations for output channel 1, which are included in the operation groups of FIG. 10A, may be performed by the MAC calculator #1 and the MAC calculator #3.

The MAC operations for output channel 3, which are included in the operation group of FIG. 10C, may be performed by the same MAC calculator #2 as in FIG. 10A. However, in FIG. 10C, because there are no MAC operations for other output channels between the MAC operations for output channel 3, control of an initial value and an accumulation value for a MAC operation may not be required. Therefore, separate hardware for storing the accumulation values of the MAC operations may not be needed.

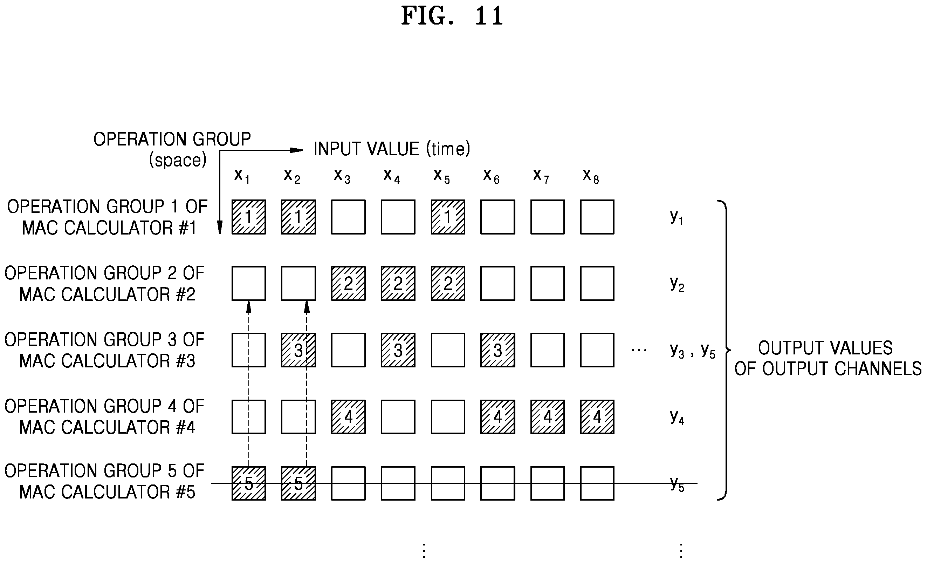

FIG. 11 is a diagram illustrating a process of reducing the number of operation groups via optimization of the operation groups of FIG. 8, according to an embodiment.

Referring to FIG. 11, at the times when the input values are $x_1$ and $x_2$, the data processing device 500 may move the weight ("5") for output channel 5 included in the operation group 5 of MAC calculator #5 to the operation group 2 of MAC calculator #2.

Compared to the example of FIG. 8, because the number of operation groups may be reduced by one, one MAC calculator (MAC calculator #5) may not be used.

That is, the present disclosure is not limited to optimization from the operation groups in FIG. 8 to the operation groups in FIG. 9, and the operation groups may be optimized so that operations for all output channels may be performed by the same MAC calculator as much as possible.

In this case, because the optimization of the operation groups may be performed quickly, the operation groups may be optimized more efficiently in real time compared to when being optimized through the processes illustrated in FIGS. 9 and 10A to 10C.

According to an embodiment, to achieve time-sharing for MAC calculators (or operation groups), control of an initial value and an accumulation value for a MAC operation is required. That is, operations for one output channel may not be continuously included in one operation group but may be included therein separately from each other. In this case, it is necessary to store an intermediate accumulation value of a MAC operation for a specific output channel and then set the stored intermediate accumulation value as an initial value when a MAC operation for the specific channel is restarted.

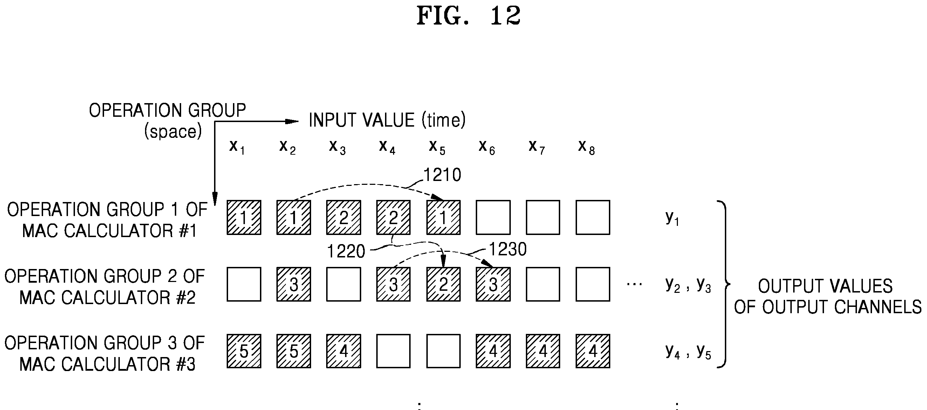

FIG. 12 is a diagram illustrating an operation in which a data processing device sets an accumulation value of a previous MAC operation as an initial value for a subsequent MAC operation, according to an embodiment.

Referring to FIG. 12, the data processing device 500 may respectively set intermediate accumulation values of MAC operations obtained at portions where arrows 1210, 1220, and 1230 begin to be initial values for MAC operations at portions where the arrows 1210, 1220, and 1230 point. In this case, the intermediate accumulation values may be stored in flip-flops located outside corresponding MAC calculators.

For example, the data processing device 500 may perform MAC operations for output channel 1 in the MAC calculator #1 during the times when the input values are $x_1$ and $x_2$. After the MAC operations are continuously performed, a MAC operation for output channel 2 may be performed. Immediately after the time when the input value is $x_2$, the data processing device 500 may store an accumulation value of the MAC operation outside of the MAC calculator #1.

The data processing device 500 may set an initial value for performing a MAC operation for output channel 2 during the time when the input value is $x_3$.

A MAC operation for output channel 2 may not have been previously performed anywhere in the MAC calculators #1 to #3. Accordingly, the initial value of the MAC operation for output channel 2 may be set to 0.

The data processing device 500 may continuously perform MAC operations for output channel 2 during the times when the input values are $x_3$ and $x_4$. Immediately after the time when the input value is $x_4$, the data processing device 500 may output an accumulation value of a MAC operation, which is obtained by performing the MAC operation for output channel 2, to outside of the MAC calculator #1 for subsequent processing in the MAC calculator #2. In this case, the accumulation value of the MAC operation may be stored in a flip-flop located outside the MAC calculator, but is not limited thereto, and may be transmitted from the MAC calculator #1 to the MAC calculator #2 without separate storage.

The data processing device 500 may set the accumulation value of the MAC operation for the output channel 2, which is output from the MAC calculator #1, as an initial value of the MAC calculator unit #2 at the time when the input value is $x_5$. The MAC operation controller 540 of the data processing device 500 may control data flow indicated by the arrow 1220.

The data processing device 500 may set the accumulation value of the MAC operation by the MAC calculator #1 for output channel 1 as an initial value of the MAC calculator unit #1 for output channel 1 at the time when the input value is $x_5$. The MAC operation controller 540 of the data processing device 500 may control data flow indicated by the arrow 1210.

The data processing device 500 may perform MAC operations for output channel 3 during the times when the input values are $x_2$ and $x_4$. Because a weight corresponding to output channel 3 is 0 during the time when the input value is x3, even when a MAC operation is performed during that time, the data processing device 500 may obtain the same accumulation value as an accumulation value obtained immediately after the time when the input value is $x_2$.

Therefore, even when MAC operations for an output channel are not consecutively performed, when there is no MAC operation for another output channel therebetween, a control operation for a separate MAC operation may not be performed.

Immediately after the time when the input value is $x_4$, the data processing device 500 may output an accumulation value of a MAC operation, which is obtained by performing the MAC operation for output channel 3, to outside of the MAC calculator #2 for subsequent processing in the MAC calculator #2. In this case, the accumulation value of the MAC operation may be stored in a flip-flop located outside the MA calculator. Because a MAC operation for output channel 3 is not performed immediately after the input value is $x_4$, the accumulation value of the MAC operation may be stored.

The data processing device 500 may set the accumulation value of the MAC operation by the MAC calculator #2 for output channel 3 as an initial value of the MAC calculator unit #2 for output channel 3 at the time when the input value is $x_6$. The MAC operation controller 540 of the data processing device 500 may control data flow indicated by the arrow 1230.

The data processing device 500 may continuously perform MAC operations for output channel 5 during the times when the input values are $x_1$ and $x_2$. Immediately after the time when the input value is x2, the data processing device 500 may output an accumulation value of a MAC operation, which is obtained by performing the MAC operation for output channel 5, to outside of the MAC calculator #3 in order to store the accumulation value. Because a MAC operation for output channel 4 is performed in the MAC calculator #3 immediately after the time when the input value is $x_2$, the accumulation value of the MAC operation for output channel 5 needs to be stored outside the MAC calculator #3.

The data processing device 500 may set an initial value for performing the MAC operation for output channel 4 at the time when the input value is $x_3$.

The MAC operation for output channel 4 may not have been previously performed anywhere in the MAC calculators #1 to #3. Accordingly, an initial value of the MAC operation for output channel 4 may be set to 0.

The data processing device 500 may perform MAC operations for output channel 4 during the times when the input values are $x_3$ and $x_6$ to $x_8$.

Because a weight corresponding to output channel 4 is 0 during the times when the input values are $x_4$ and $x_5$, even when the MAC operation is performed during the times when the input values are $x_4$ and $x_5$, the data processing device 500 may obtain an accumulation value immediately after the time when the input value is $x_5$, which is the same as an accumulation value immediately after the time when the input value is $x_3$. Alternatively, when MAC operations are not performed during the times when the input values are $x_4$ and $x_3$, the data processing device 500 may obtain an accumulation value immediately after the time when the input value is $x_5$, which is the same as the accumulation value immediately after the time when the input value is X3.

Therefore, even when MAC operations for an output channel are not consecutively performed, when there is no MAC operation for another output channel therebetween, a control operation for a separate MAC operation may not be performed.

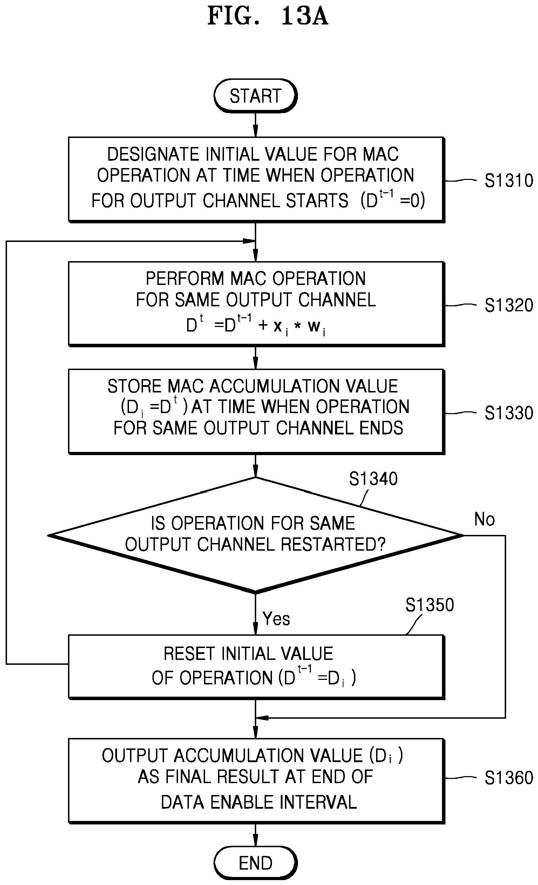

FIG. 13A is a flowchart of a method of controlling data associated with an initial value and an accumulation value of a MAC operation.

Referring to FIG. 13A, in operation S1310, the data processing device 500 may set an initial value for a MAC operation at a time when the MAC operation for an output channel starts. The data processing device 500 may set the initial value $D^{t-1}$ for the MAC operation to 0.

In operation S1320, the data processing device 500 may perform a MAC operation for the output channel. The data processing device 500 may perform the MAC operation for the output channel according to Equation 1 below.

[Equation 1]

$$D^t = D^{t-1} + x_i {}^* w_i$$

Here, $D^{t-1}$ may represent a value stored in a flip-flop at time t-1, and represent an accumulation value obtained due to MAC operations previously performed. $D^t$ may represent a value stored in a flip-flop at time t, and represent an accumulation value obtained via a current MAC operation. $x_i$ may represent an input value, and $w_i$ may represent a weight value corresponding to the input value $x_i$.

In this case, the data processing device 500 may perform MAC operations for the same output channel. At this time, there may be a MAC operation for a different output channel between the MAC operations for the same output channel.

In operation S1330, the data processing device 500 may store an accumulation value of a MAC operation at a time when the operation for the same output channel ends. In this case, a location where the accumulation value is stored may be the MAC operation accumulation value storage 550 located outside a MAC calculator.

In operation S1340, the data processing device 500 may determine whether a MAC operation for the same output channel is to be restarted.

In operation S1350, when it is determined that the MAC operation for the same output channel is to be restarted, the data processing device 500 may reset an initial value of the MAC operation. In this case, the initial value may be a value stored in the MAC operation accumulation value storage 550. That is, the initial value may be obtained from the MAC operation accumulation value storage 550 located externally. In operation S1320, the data processing device 500 may perform a MAC operation for the same output channel based on the initial value set in operation S1350, and perform operations S1330 and S1340 described above.

In operation S1360, when it is determined that the MAC operation for the same output channel is not to be restarted, the data processing device 500 may not perform any further MAC operations. The data processing device 500 may output the accumulation value $D_i$ as a final result at the end of a data enable interval.

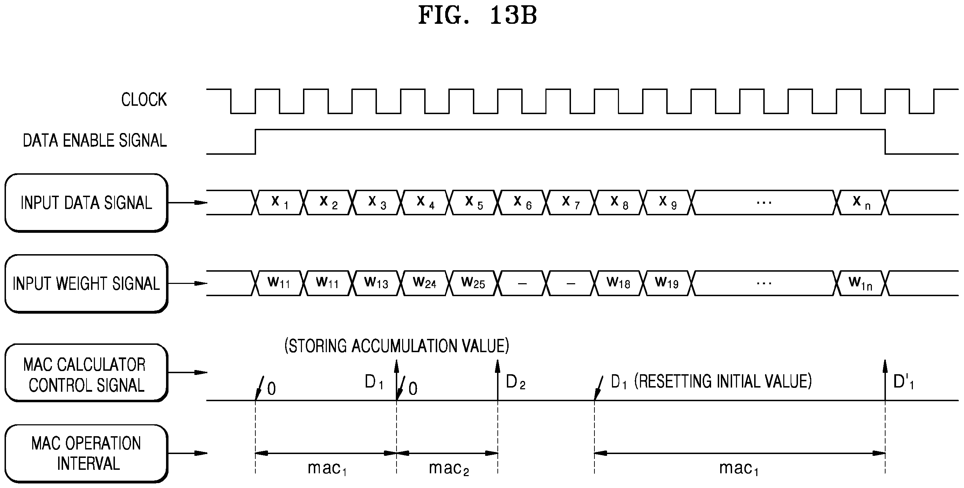

FIG. 13B is a waveform diagram illustrating a control operation for a MAC calculator, according to an embodiment.

Referring to FIG. 13B, the data processing device 500 may perform a MAC operation for each clock based on an input data signal and an input weight signal that are synchronized.

After performing MAC operations for output channel 1 from clock 1 to clock 3 (maci), the data processing device 500 may store an accumulation value of the MAC operations externally. At this time, the MAC operation controller 540 may control the MAC calculator unit 530 to store an accumulation value $D_1$ in the MAC operation accumulation value storage 550.

The data processing device 500 may perform MAC operations for output channel 2 from clock 4 to clock 5 ($mac_2$). Before performing a MAC operation for output channel 2, an initial value may be set to 0. After performing the MAC operation, the data processing device 500 may externally store an accumulation value of the MAC operation. At this time, the MAC operation controller 540 may control the MAC calculator unit 530 to store an accumulation value $D_2$ in the MAC operation accumulation value storage 550.

However, the present disclosure is not limited thereto, and the accumulation value may be stored externally immediately before a MAC operation for another output channel is performed. That is, because corresponding weights are 0 at clock 6 and clock 7, a MAC operation may not be actually performed, and the accumulation value may not be updated at clock 6 and clock 7. Therefore, the accumulation value $D_2$ may be stored in the MAC operation accumulation value storage 550 after clock 7.

The data processing device 500 may perform MAC operations for output channel 1 from clock 8 to clock n (maci). Before performing the MAC operation for output channel 1, an initial value for output channel 1 may be set to $D_1$. The data processing device 500 may set $D_1$ stored in the MAC operation accumulation value storage 550 as the initial value for output channel 1.

After performing the MAC operations for output channel 1 from clock 8 to clock n (maci), the data processing device 500 may output an accumulation value of the MAC operations to the outside. The MAC operation controller 540 may control the MAC calculator unit 530 to output an accumulation value $D'_1$ to the outside at the end of a data enable interval. Furthermore, the MAC operation controller 540 may control the MAC calculator unit 530 to output the accumulation value $D'_1$ to the outside at the end of the data enable interval.

As described above, the data processing device 500 may be included in a display device that processes image quality and may be used to improve the image quality of an input image input to the display device. For example, pixels on a display of the display device may have a resolution of 8K (7680x4320) or higher. Also, a source image input to the display device may have a resolution of 2K (1920x1080) or less. In this case, the display device may use the data processing device 500 as described in this disclosure to process the image quality of an input low-resolution image for output via a high-resolution display.

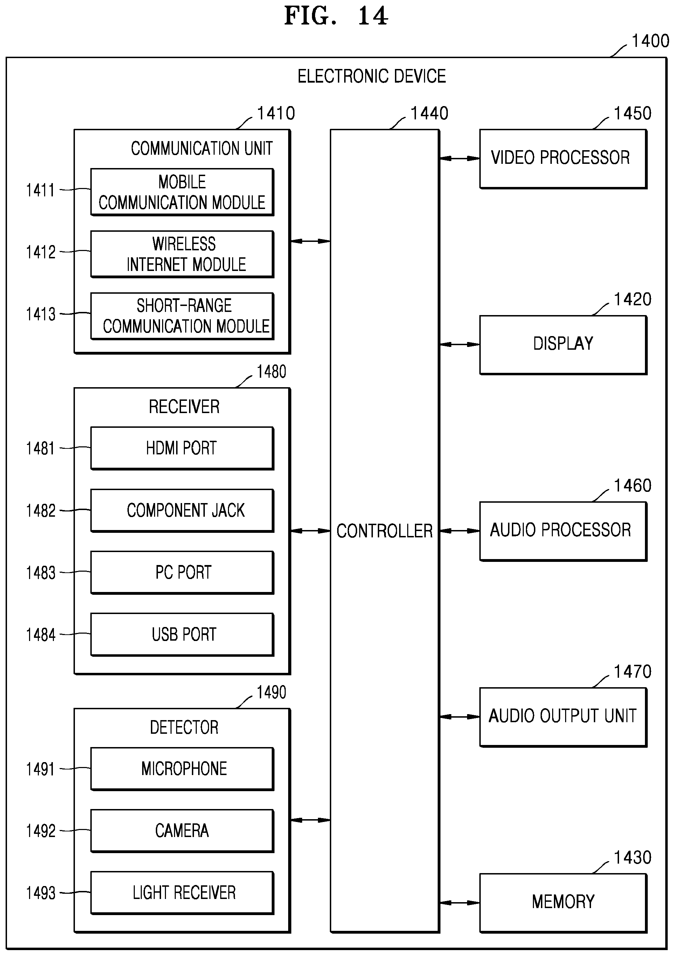

FIG. 14 is a detailed block diagram of an electronic device 1400 that performs data processing by using the data processing device 500, according to an embodiment.

Referring to FIG. 14, the electronic device 1400 may further include, in addition to a communication unit 1410, a display 1420, a memory 1430, and a controller1440, a video processor 1450, an audio processor 1460, an audio output unit 1470, a receiver 1480, and a detector 1490.

The electronic device 1400 may include the data processing device 500 of FIG. 5. The data processing device 500 of FIG. 5 may be included in the video processor 1450, but is not limited thereto.

The electronic device 1400 may also be referred to as a display device.

The communication unit 1410 may include one or more modules that enable wireless communication between the electronic device 1400 and a wireless communication system or between the electronic device 1400 and a network on which another electronic device is located. For example, the communication unit 1410 may include a mobile communication module 1411, a wireless Internet module 1412, and a short-range communication module 1413.

The mobile communication module 1411 transmits and receives wireless signals to or from at least one of a base station, an external terminal, and a server on a mobile communication network. The wireless signals may include a voice call signal, a video call signal, or various types of data according to transmission and reception of text/multimedia messages.

The wireless Internet module 1412 refers to a module for wireless Internet access, and may be built into or external to a device. As wireless Internet technologies, wireless local area network (WLAN) (WiFi), wireless broadband (WiBro), World Interoperability for Microwave Access (WiMAX), high speed downlink packet access (HSDPA), etc. may be used. The device may establish a W-Fi peer-to-peer (P2P) connection with another device via the wireless Internet module 1412. The electronic device 1400 may communicate with a server computer via the wireless Internet module 1412.

The short-range communication module 1413 refers to a module for short-range communication. As short-range communication technologies, Bluetooth, radio frequency identification (RFID), Infrared Data Association (IrDA), ultra-wideband (UWB), ZigBee, etc. may be used.

According to an embodiment, according to control by the controller 1440, the communication unit 1410 may request the server computer to transmit content requested to be executed and receive frames of the content requested to be executed from the server computer.

According to control by the controller 1440, the video processor 1450 may process an image signal received from the receiver 1480 or the communication unit 1410 and output the image signal on the display 1420.

According to an embodiment, the video processor 1450 may include a main buffer for receiving frames corresponding to content, a decoder for decoding frames output from the main buffer, and a frame processor for processing the decoded frames.

The display 1420 may display the image signals received from the video processor 1450 on a screen.

According to control by the controller 1440, the audio processor 1460 may convert an audio signal received from the receiver 1480 or the communication unit 1410 into an analog audio signal and output the analog audio signal to the audio output unit 1470.

The audio output unit 1470 may output the received analog audio signal via a speaker.

The receiver 1480 may receive, according to control by the controller 1440, video (e.g., a moving image, etc.), audio (e.g., voice, music, etc.), and additional information (e.g., an electronic program guide (EPG), etc.) from outside of the electronic device 1400. The receiver 1480 may include one of a High-Definition Multimedia Interface (HDMI) port 1481, a component jack 1482, a PC port 1483, and a universal serial bus (USB) port 1484, or a combination of one or more of these. In addition to the HDMI port, the receiver 1480 may further include DisplayPort (DP), Thunderbolt, and Mobile High-Definition Link (MHL).

The detector 1490 detects a user's voice, a user's images, or a user's interaction and may include a microphone 1491, a camera 1492, and a light receiver 1493. The microphone 1491 may receive a voice uttered by the user, convert the received voice into an electrical signal, and output the electrical signal to the controller 1440. The camera 1492 receives an image (e.g., consecutive frames) corresponding to a user's motion including his or her gesture performed within a camera's recognition range. The light receiver 1493 receives an optical signal (including a control signal) received from a remote control device. The light receiver 1493 may receive, from the remote control device, an optical signal corresponding to a user input (e.g., touching, pressing, touch gesture, voice, or motion) A control signal may be extracted from the received optical signal according to control by the controller 1440.

According to an embodiment, the memory 1430 may store programs necessary for processing or control operations by the controller 1440, and store data input to or output from the electronic device 1400.

The memory 1430 may include at least one type of storage medium among a flash memory-type memory, a hard disk-type memory, a multimedia card micro-type memory, a card-type memory (e.g., an SD card or an XD memory), random access memory (RAM), static RAM (SRAM), read-only memory (ROM), electrically erasable programmable ROM (EEPROM), PROM, a magnetic memory, a magnetic disc, and an optical disc.

The controller 1440 controls all operations of the electronic device 1400. For example, the controller 1440 may perform functions of the electronic device 1400 described in the present disclosure by executing one or more instructions stored in the memory 1430.

In an embodiment of the present disclosure, the controller 1440 may execute one or more instructions stored in the memory 1430 to control the above-described operations to be performed. In this case, the memory 1430 may store one or more instructions executable by the controller 1440.

Also, in an embodiment of the present disclosure, the controller 1440 may store one or more instructions in an internal memory provided therein and execute the one or more instructions stored in the internal memory to control the above-described operations to be performed. In other words, the controller 1440 may execute at least one instruction or program stored in the internal memory provided in the controller 1440 or the memory 1430 to perform certain operations.

In addition, the controller 1440 may include one or more processors. In this case, each of the operations performed by the electronic device according to an embodiment of the present disclosure may be performed via at least one of the plurality of processors.

According to an embodiment of the present disclosure, the data processing device 500 may effectively perform MAC operations for a plurality of output channels through time-sharing for MAC calculators (or operation groups), thereby effectively reducing the amount of dummy operations for performing a convolutional operation corresponding to a neural network. Thus, according to an embodiment of the present disclosure, the size of hardware required to perform a convolution operation may be reduced, and power consumption may be reduced.

A machine-readable storage medium may be provided in the form of a non-transitory storage medium. In this regard, the term 'non-transitory' only means that the storage medium is a tangible device and does not include a signal (e.g., an electromagnetic wave), and the term does not differentiate between where data is semi-permanently stored in the storage medium and where the data is temporarily stored in the storage medium. For example, the 'non-transitory storage medium' may include a buffer in which data is temporarily stored.

According to an embodiment, methods according to various embodiments set forth herein may be included in a computer program product when provided. The computer program product may be traded, as a product, between a seller and a buyer. The computer program product may be distributed in the form of a machine-readable storage medium (e.g., compact disc ROM (CD-ROM)) or distributed (e.g., downloaded or uploaded) online via an application store or directly between two user devices (e.g., smartphones). For online distribution, at least a part of the computer program product (e.g., a downloadable app) may be at least transiently stored or temporally generated in the machine-readable storage medium such as a memory of a server of a manufacturer, a server of an application store, or a relay server.

**Claims**

1. A data processing method comprising:

   obtaining, in order to perform a convolution operation for a plurality of output channels corresponding to a neural network, at least one weight corresponding to at least one input value for at least one output channel among the plurality of output channels;
   determining at least one operation group corresponding to at least one multiply-accumulate (MAC) calculator so as to include a MAC operation for a second output channel, which does not overlap with a MAC operation for a first output channel at a first operation time, as a MAC operation performed by a first MAC calculator; and
   generating a plurality of output values corresponding to the plurality of output channels by performing MAC operations in at least one MAC calculator by using the at least one input value and the at least one weight according to the determined at least one operation group.

2. The data processing method of claim 1, wherein the first MAC calculator is configured to perform the MAC operation for the first output channel at a second operation time.

3. The data processing method of claim 1 or 2, wherein

   the at least one input value and the at least one weight are sequentially input to the at least one MAC calculator, and
   the at least one input value and the at least one weight input to the at least one MAC calculator are synchronized.

4. The data processing method of any one of claims 1 to 3, wherein

   the neural network is a pruned neural network, the pruned neural network is a neural network with a first weight corresponding to an unpruned neural network set to 0 when the first weight is less than or equal to a predetermined value, and a weight for the MAC operation for the first output channel at the first operation time is 0.

5. The data processing method of any one of claims 1 to 4, wherein the at least one MAC calculator each comprises one multiplier, one adder, and a flip-flop for storing an operation result.

6. The data processing method of any one of claims 1 to 5, wherein
   after a same MAC calculator performs a MAC operation for the second output channel at the first operation time, an accumulation value of the MAC operation is stored in an external storage, and the accumulation value stored in the external storage is set as an initial value of a MAC operation for the second output channel at the second operation time, and the first operation time and the second operation time are not consecutive but are separate from each other.

7. The data processing method of any one of claims 1 to 5, wherein after the first MAC calculator performs the MAC operation for the first output channel output channel at the second operation time, an accumulation value of the MAC operation is stored in an external storage, and the accumulation value stored in the external storage is set as an initial value of a MAC operation for the first output channel to be performed by a second MAC calculator at the second operation time.

8. The data processing method of any one of claims 1 to 7, wherein

   after the same MAC calculator performs the MAC operation for the second output channel at the first operation time, the accumulation value of the MAC operation is stored in a flip-flop included in the MAC calculator, and the accumulation value stored in the flip-flop is set as an initial value of a MAC operation for the second output channel at the second operation time, and
   the first operation time and the second operation time are consecutive.

9. The data processing method of any one of claims 1 to 8, wherein accumulation values of MAC operations stored in the external storage or at least one flip-flop included in the at least one MAC calculator are simultaneously output as a plurality of output values at an end of a data enable interval.

10. The data processing method of any one of claims 1 to 9, wherein a number of the at least one MAC calculator corresponding to the at least one operation group is less than a number of the output channels.

11. The data processing method of any one of claims 1 to 10, wherein the determining of the at least one operation group comprises determining the at least one operation group by moving some of MAC operations for the at least one output channel from a first operation group to a second operation group according to a priority of the at least one output channel, such that the MAC operations for the at least one output channel are included in a same operation group.

12. The data processing method of any one of claims 1 to 10, wherein the determining of the at least one operation group comprises determining the at least one operation group by moving some of MAC operations for the at least one output channel from a first operation group to a second operation group according to a priority of the at least one output channel and an output channel other than the at least one output channel, such that there is no MAC operation for the other output channel between the MAC operations for the at least one output channel.

13. The data processing method of any one of claims 1 to 12, wherein

the at least one operation group is determined for a number of input values determined based on a size of a filter, and
the at least one operation group is determined for each frame or in units of a plurality of frames.

14. A data processing device comprising

at least one processor configured to: obtain, in order to perform a convolution operation for a plurality of output channels corresponding to a neural network, at least one weight corresponding to at least one input value for at least one output channel among the plurality of output channels;
determine at least one operation group corresponding to at least one multiply-accumulate (MAC) calculator so as to include a MAC operation for a second output channel, which does not overlap with a MAC operation for a first output channel at a first operation time, as a MAC operation performed by a first MAC calculator; and
generate a plurality of output values corresponding to the plurality of output channels by performing MAC operations in at least one MAC calculator by using the at least one input value and the at least one weight according to the determined at least one operation group.

15. A computer-readable recording medium having recorded thereon a program for performing the method of any one of claims 1 to 13 on a computer.

EP 4 451 176 A1

# FIG. 1

100

110

PRUNED NEURAL NETWORK INPUTS

PRUNED NETWORK INPUTS

$\square$ PRUNED NETWORK(120)

$x_1$  $x_2$  $x_3$  $x_4$  $x_5$  $x_6$  $\cdots$  $x_n$

$w_{11}$  $w_{12}$  $w_{13}$  $w_{14}$  $w_{15}$  $w_{16}$  $w_{1n}$  $y_1$

$w_{21}$  $w_{22}$  $w_{23}$  $w_{24}$  $w_{25}$  $w_{26}$  $w_{2n}$  $y_2$

$w_{31}$  $w_{32}$  $w_{33}$  $w_{34}$  $w_{35}$  $w_{36}$  $w_{3n}$  $y_3$

OUTPUTS

$w_{41}$  $w_{42}$  $w_{43}$  $w_{44}$  $w_{45}$  $w_{46}$  $\ldots w_{4n}$  $y_4$

$w_{m1}$  $w_{m2}$  $w_{m3}$  $w_{m4}$  $w_{m5}$  $w_{m6}$  $\ldots w_{mn}$  $y_m$

$x_1$  $x_2$  $x_3$  $x_4$  $x_5$  $x_6$  $\cdots$  $x_n$

$w_{11}$  $w_{12}$  $w_{13}$  $w_{14}$  $w_{15}$  $w_{16}$  $w_{1n}$  $y_1$

$w_{21}$  $w_{22}$  $w_{23}$  $w_{24}$  $w_{25}$  $w_{26}$  $w_{2n}$  $y_2$

$w_{31}$  $w_{32}$  $w_{33}$  $w_{34}$  $w_{35}$  $w_{36}$  $w_{3n}$  $y_3$

OUTPUTS

$w_{41}$  $w_{42}$  $w_{43}$  $w_{44}$  $w_{45}$  $w_{46}$  $\ldots w_{4n}$  $y_4$

$w_{m1}$  $w_{m2}$  $w_{m3}$  $w_{m4}$  $w_{m5}$  $w_{m6}$  $\ldots w_{mn}$  $y_m$

# FIG. 2

# FIG. 3

# FIG. 4

$x_1\ x_2\ x_3\ x_4\ x_5\ x_6\ x_7\ x_8\ ...\ x_n$

$W_{11}\ W_{12}\ W_{23}\ W_{24}\ W_{25}\ W_{26}\ W_{27}\ W_{18}\ ...\ W_{1n}$

$W_{41}\ W_{42}\ W_{33}\ W_{34}\ W_{35}\ W_{36}\ W_{37}\ W_{38}\ ...\ W_{mn}$

400

$D^{t-1}$    410

$y_1\ ,y_2$

$D^{t-1}$    420

$y_3\ ,y_4\ ,y_m$

# FIG. 5

500

DATA PROCESSING SYSTEM

510

DATA
INPUT UNIT

540

MAC OPERATION
CONTROLLER

550

MAC
OPERATION
ACCUMULATION
VALUE STORAGE

520

WEIGHT
SETTING UNIT

530

MAC
CALCULATOR
UNIT

560

DATA
OUTPUT UNIT

# FIG. 6

START

OBTAIN, IN ORDER TO PERFORM CONVOLUTION OPERATION FOR PLURALITY OF OUTPUT CHANNELS CORRESPONDING TO NEURAL NETWORK, AT LEAST ONE WEIGHT CORRESPONDING TO AT LEAST ONE INPUT VALUE FOR AT LEAST ONE OUTPUT CHANNEL AMONG PLURALITY OF OUTPUT CHANNELS ——S610

DETERMINE AT LEAST ONE OPERATION GROUP TOR CORRESPONDING TO AT LEAST ONE MAC CALCULATOR SO AS TO INCLUDE MAC OPERATION FOR SECOND OUTPUT CHANNEL, WHICH DOES NOT OVERLAP WITH MAC OPERATION FOR FIRST OUTPUT CHANNEL AT FIRST OPERATION TIME, AS MAC OPERATION PERFORMED BY FIRST MAC CALCULA ——S620

GENERATE PLURALITY OF OUTPUT VALUES CORRESPONDING TO PLURALITY OF OUTPUT CHANNELS BY PERFORMING MAC OPERATIONS IN AT LEAST ONE MAC CALCULATOR BY USING AT LEAST ONE INPUT VALUE AND AT LEAST ONE WEIGHT ACCORDING TO DETERMINED AT LEAST ONE OPERATION GROUP ——S630

END

FIG. 7A

EP 4 451 176 A1

# FIG. 7B

INPUT CHANNELS(ich)

OPERATION GROUP 1 — ich1 ich2 ich3 ich4 ich5 ich6 → och1

OUTPUT CHANNEL(och)

OPERATION GROUP 2 — ich1 ich2 ich3 ich4 ich5 ich6 → och2

⊠ : PRUNING BY SETTING WEIGHTS TO 0

TIME-SHARING FOR MAC CALCULATORS
(OR OPERATION GROUPS)

INPUT CHANNELS(ich)

NEW OPERATION GROUP 1 — ich1 ich2 ich3 | ich4 ich5 ich6 → och1

OUTPUT CHANNEL(och)

PORTION OF EXISTING OPERATION GROUP 1    PORTION OF EXISTING OPERATION GROUP 2

EP 4 451 176 A1

FIG. 8

OPERATION GROUP
(space)

INPUT VALUE
(time)

$x_1$  $x_2$  $x_3$  $x_4$  $x_5$  $x_6$  $x_7$  $x_8$

OPERATION GROUP 1 OF
MAC CALCULATOR #1 — 1 1 ☐ ☐ 1 ☐ ☐ ☐  $y_1$

OPERATION GROUP 2 OF
MAC CALCULATOR #2 — ☐ ☐ 2 2 2 ☐ ☐ ☐  $y_2$

OPERATION GROUP 3 OF
MAC CALCULATOR #3 — ☐ 3 ☐ 3 ☐ 3 ☐ ☐ ⋯  $y_3$    OUTPUT VALUES
OF OUTPUT CHANNELS

OPERATION GROUP 4 OF
MAC CALCULATOR #4 — ☐ ☐ 4 ☐ ☐ 4 4 4  $y_4$

OPERATION GROUP 5 OF
MAC CALCULATOR #5 — 5 5 ☐ ☐ ☐ ☐ ☐ ☐  $y_5$

⋮                          ⋮

EP 4 451 176 A1

EP 4 451 176 A1

# FIG. 9

OPERATION
GROUP
(space) → INPUT VALUE (time)

$x_1$ $x_2$ $x_3$ $x_4$ $x_5$ $x_6$ $x_7$ $x_8$

OPERATION GROUP 1 OF
MAC CALCULATOR #1 → | 1 | 1 | 2 | 2 | 1 | 3 | 4 | 4 |  $y_1$ , $y_3$ , $y_4$

OPERATION GROUP 2 OF
MAC CALCULATOR #2 | 5 | 3 | 4 | 3 | 2 | 4 | □ | □ |  $y_2$

OPERATION GROUP 3 OF
MAC CALCULATOR #3 | □ | 5 | □ | □ | □ | □ | □ | □ |  ···  $y_5$

OUTPUT VALUES
OF OUTPUT CHANNELS

: :

# FIG. 10A

OPERATION GROUP (space) → INPUT VALUE (time)

|  | $x_1$ | $x_2$ | $x_3$ | $x_4$ | $x_5$ | $x_6$ | $x_7$ | $x_8$ | |
|---|---|---|---|---|---|---|---|---|---|
| OPERATION GROUP 1 OF MAC CALCULATOR #1 | 1 | 1 | 2 | 2 | 1 | | | | $y_1$ |
| OPERATION GROUP 2 OF MAC CALCULATOR #2 | | 3 | | 3 | 2 | 3 | | | ··· $y_2 , y_3$ |
| OPERATION GROUP 3 OF MAC CALCULATOR #3 | 5 | 5 | 4 | | | 4 | 4 | 4 | $y_4 , y_5$ |

OUTPUT VALUES OF OUTPUT CHANNELS

EP 4 451 176 A1

# FIG. 10B

OPERATION GROUP (space) → INPUT VALUE (time)

| | $x_1$ | $x_2$ | $x_3$ | $x_4$ | $x_5$ | $x_6$ | $x_7$ | $x_8$ | |
|---|---|---|---|---|---|---|---|---|---|
| OPERATION GROUP 1 OF MAC CALCULATOR #1 | 1 | 1 | 2 | 2 | 1 | | | | $y_1$ |
| OPERATION GROUP 2 OF MAC CALCULATOR #2 | 5 | 5 | 4 | | 2 | 4 | 4 | 4 | ⋯ $y_2, y_5, y_4$ |
| OPERATION GROUP 3 OF MAC CALCULATOR #3 | | 3 | | 3 | | 3 | | | $y_3$ |

OUTPUT VALUES OF OUTPUT CHANNELS

# FIG. 10C

EP 4 451 176 A1

FIG. 11

OPERATION GROUP (space) → INPUT VALUE (time)

OUTPUT VALUES OF OUTPUT CHANNELS

| | $x_1$ | $x_2$ | $x_3$ | $x_4$ | $x_5$ | $x_6$ | $x_7$ | $x_8$ | |
|---|---|---|---|---|---|---|---|---|---|
| OPERATION GROUP 1 OF MAC CALCULATOR #1 | 1 | 1 | | | 1 | | | | $y_1$ |
| OPERATION GROUP 2 OF MAC CALCULATOR #2 | | | 2 | 2 | 2 | | | | $y_2$ |
| OPERATION GROUP 3 OF MAC CALCULATOR #3 | | 3 | | 3 | | 3 | | | $y_3 , y_5$ |
| OPERATION GROUP 4 OF MAC CALCULATOR #4 | | | 4 | | | 4 | 4 | 4 | $y_4$ |
| OPERATION GROUP 5 OF MAC CALCULATOR #5 | 5 | 5 | | | | | | | $y_5$ |

...

EP 4 451 176 A1

# FIG. 12

# FIG. 13A

START

DESIGNATE INITIAL VALUE FOR MAC
OPERATION AT TIME WHEN OPERATION
FOR OUTPUT CHANNEL STARTS $(D^{t-1} = 0)$ — S1310

PERFORM MAC OPERATION
FOR SAME OUTPUT CHANNEL
$D^{t} = D^{t-1} + x_i * w_i$ — S1320

STORE MAC ACCUMULATION VALUE
$(D_i = D^{t})$ AT TIME WHEN OPERATION
FOR SAME OUTPUT CHANNEL ENDS — S1330

S1340

IS OPERATION FOR SAME
OUTPUT CHANNEL RESTARTED? — No

Yes — S1350

RESET INITIAL VALUE
OF OPERATION $(D^{t-1} = D_i)$

OUTPUT ACCUMULATION VALUE $(D_i)$
AS FINAL RESULT AT END OF
DATA ENABLE INTERVAL — S1360

END

# FIG. 13B

CLOCK

DATA ENABLE SIGNAL

INPUT DATA SIGNAL — $X_1$ $X_2$ $X_3$ $X_4$ $X_5$ $X_6$ $X_7$ $X_8$ $X_9$ ... $X_n$

INPUT WEIGHT SIGNAL — $W_{11}$ $W_{11}$ $W_{13}$ $W_{24}$ $W_{25}$ — — $W_{18}$ $W_{19}$ ... $W_{1n}$

MAC CALCULATOR CONTROL SIGNAL →

(STORING ACCUMULATION VALUE)

$0$   $D_1$ $0$   $D_2$   $D_1$ (RESETTING INITIAL VALUE)   $D'_1$

MAC OPERATION INTERVAL →

$mac_1$   $mac_2$   $mac_1$

EP 4 451 176 A1

# FIG. 14

1400

**ELECTRONIC DEVICE**

1410

## COMMUNICATION UNIT

1411 — MOBILE COMMUNICATION MODULE

1412 — WIRELESS INTERNET MODULE

1413 — SHORT-RANGE COMMUNICATION MODULE

1480

## RECEIVER

1481 — HDMI PORT

1482 — COMPONENT JACK

1483 — PC PORT

1484 — USB PORT

1490

## DETECTOR

1491 — MICROPHONE

1492 — CAMERA

1493 — LIGHT RECEIVER

1440

CONTROLLER

1450

VIDEO PROCESSOR

1420

DISPLAY

1460

AUDIO PROCESSOR

1470

AUDIO OUTPUT UNIT

1430

MEMORY

<div align="center">

**INTERNATIONAL SEARCH REPORT**

</div>

| International application No. |
|---|
| **PCT/KR2022/021539** |

| A. | CLASSIFICATION OF SUBJECT MATTER |
|---|---|
| | **G06N 3/08**(2006.01)i; **G06N 3/04**(2006.01)i; **G06N 3/063**(2006.01)i; **G06F 7/544**(2006.01)i |

According to International Patent Classification (IPC) or to both national classification and IPC

| B. | FIELDS SEARCHED |
|---|---|

Minimum documentation searched (classification system followed by classification symbols)

G06N 3/08(2006.01); G06F 7/24(2006.01); G06N 3/04(2006.01); G06N 3/063(2006.01); G06N 3/10(2006.01); G06N 5/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 신경망(neural network), 가중치(weight), 제로(zero), 채널(channel), 합성곱 연산 (multiply–accumulate operation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2022-0036167 A1 (XIAMEN SIGMASTAR TECHNOLOGY LTD.) 03 February 2022 (2022-02-03) See claims 1 and 6. | 1-5,9-15 |
| A | | 6-8 |
| Y | US 2021-0019633 A1 (FACEBOOK TECHNOLOGIES, LLC) 21 January 2021 (2021-01-21) See paragraphs [0057], [0062]-[0064] and [0084]. | 1-5,9-15 |
| Y | US 2021-0027166 A1 (INTEL CORPORATION) 28 January 2021 (2021-01-28) See claim 26. | 11-12 |
| A | KR 10-2018-0101978 A (SAMSUNG ELECTRONICS CO., LTD. et al.) 14 September 2018 (2018-09-14) See paragraphs [0039]-[0049]; and figures 3-4. | 1-15 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **30 March 2023** | **30 March 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/021539**

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0057814 A (SAMSUNG ELECTRONICS CO., LTD.) 27 May 2020 (2020-05-27)<br>See claims 1-7. | 1-15 |

Form PCT/ISA/210 (second sheet) (July 2022)

INTERNATIONAL SEARCH REPORT
Information on patent family members

International application No.

**PCT/KR2022/021539**

| Patent document cited in search report | | | Publication date (day/month/year) | Patent family member(s) | | | Publication date (day/month/year) |
|---|---|---|---|---|---|---|---|
| US | 2022-0036167 | A1 | 03 February 2022 | CN | 112200295 | A | 08 January 2021 |
|  |  |  |  | TW | 202207092 | A | 16 February 2022 |
|  |  |  |  | TW | I740726 | B | 21 September 2021 |
| US | 2021-0019633 | A1 | 21 January 2021 | CN | 114127742 | A | 01 March 2022 |
|  |  |  |  | EP | 4000066 | A1 | 25 May 2022 |
|  |  |  |  | JP | 2022-540749 | A | 20 September 2022 |
|  |  |  |  | KR | 10-2022-0034804 | A | 18 March 2022 |
|  |  |  |  | WO | 2021-011315 | A1 | 21 January 2021 |
| US | 2021-0027166 | A1 | 28 January 2021 | WO | 2019-197855 | A1 | 17 October 2019 |
| KR | 10-2018-0101978 | A | 14 September 2018 | KR | 10-2390379 | B1 | 26 April 2022 |
|  |  |  |  | US | 2018-0253636 | A1 | 06 September 2018 |
| KR | 10-2020-0057814 | A | 27 May 2020 | EP | 3867825 | A1 | 25 August 2021 |
|  |  |  |  | EP | 3867825 | A4 | 22 June 2022 |
|  |  |  |  | US | 11561516 | B2 | 24 January 2023 |
|  |  |  |  | US | 2020-0150598 | A1 | 14 May 2020 |
|  |  |  |  | WO | 2020-101350 | A1 | 22 May 2020 |

Form PCT/ISA/210 (patent family annex) (July 2022)